# EUROPEAN PATENT APPLICATION

(11) **EP 4 192 115 A1**
(43) Date of publication of application: **07.06.2023**
(21) Application number: 21860207.6
(22) Date of filing: 17.08.2021
(51) Int. Cl.: H04W 48/08

(54) **METHOD AND APPARATUS FOR NETWORK SEARCH IN A MULTI-CARD MODE AND TERMINAL DEVICE**

(30) Priority: 26.08.2020 CN 202010873954
(71) Applicant: Huawei Technologies Co., Ltd., Shenzhen, Guangdong 518129 (CN)
(72) Inventor: LIU, Haiyi, Shenzhen, Guangdong 518129 (CN); XU, Bo, Shenzhen, Guangdong 518129 (CN)
(74) Representative: Pfenning, Meinig & Partner mbB
(86) International application number: PCT/CN2021/112965
(87) International publication number: WO 2022/042369

(57) **Abstract**

This application discloses a network search method in a multi-card mode, an apparatus, and a terminal device, and relates to the field of communications technologies. This can reduce network search time and resources of a plurality of subscriber identity module cards. In this application, in an independent network search process, the plurality of subscriber identity module cards may share network search progress of the subscriber identity module cards in real time. For example, when finding a cell, a first SIM card may send network search information of the first SIM card to a second SIM card in real time, to prevent the second SIM card from wasting a network search resource to search for a cell in a same frequency band or frequency, so that time and resources are reduced.

## Description

This application claims priority to Chinese Patent Application No. 202010873954.9, filed with the China National Intellectual Property Administration on August 26, 2020 and entitled "NETWORK SEARCH METHOD IN MULTI-CARD MODE, APPARATUS, AND TERMINAL DEVICE", which is incorporated herein by reference in its entirety.

### TECHNICAL FIELD

Embodiments of this application relate to the field of communications technologies, and in particular, to a network search method in a multi-card mode, an apparatus, and a terminal device.

### BACKGROUND

Currently, more terminal devices support a multi-card mode. "Multi-card" means that a terminal device includes a plurality of subscriber identity module card (for example, a subscriber identity module (subscriber identity module, SIM) card) slots, and a plurality of subscriber identity module cards may be simultaneously inserted into the terminal device. Each subscriber identity module card may support a plurality of network standards, for example, support one or more network standards such as a global system for mobile communication (global system for mobile communication, GSM), wideband code division multiple access (wideband code division multiple access, WCDMA), code division multiple access (code division multiple access, CDMA), long term evolution (long term evolution, LTE), or new radio (new radio, NR).

The plurality of subscriber identity module cards in the terminal device in the multi-card mode search for networks independently, for example, search for networks after power-on or search for networks after going online again. Specifically, two subscriber identity module cards independently complete cell search in each supported network standard and frequency band.

For two subscriber identity module cards that support a relatively large quantity of network standards and/or relatively wide frequency bands corresponding to the supported network standards, it takes a relatively long time to complete network search, affecting user experience.

### SUMMARY

This application provides a network search method in a multi-card mode, an apparatus, and a terminal device. In a network search process, a plurality of subscriber identity module cards share respective network search results in real time for reference by other subscriber identity module cards, so that time and resources are reduced.

To achieve the foregoing objective, the following technical solutions are used in embodiments of this application.

According to a first aspect, a network search method in a multi-card mode is provided. The method is applied to a terminal device carrying a first SIM card and a second SIM card. When the terminal device meets a preset condition, the terminal device performs a network search procedure. The network search procedure includes: When the first SIM card and the second SIM card separately fail to search for a cell in a historical frequency, the first SIM card searches for a cell in a first frequency band or a first frequency, and the second SIM card searches for a cell in a second frequency band or a second frequency, where the first frequency band and the first frequency belong to a first standard, and the second frequency band and the second frequency belong to the first standard or a second standard; the first frequency band or the first frequency, and the second frequency band or the second frequency are preset in the terminal device; and when the first SIM card fails to search for the cell in the first frequency band or the first frequency, the second SIM card skips searching for a cell in the first frequency band or the first frequency, where public land mobile networks (public land mobile network, PLMN) of networks to which the first SIM card and the second SIM card belong are the same.

According to the technical solution provided in the first aspect, in an independent network search process, a plurality of subscriber identity module cards may share network search progress of the subscriber identity module cards in real time. For example, when finding a cell, the first SIM card may send network search information of the first SIM card to the second SIM card in real time, to prevent the second SIM card from wasting a network search resource to search for a cell in a same frequency band or frequency, so that time and resources are reduced.

In a possible implementation, when the first SIM card finds a first cell in the first frequency band or the first frequency, the first SIM card sends first search information to the second SIM card, so that the second SIM card skips searching for the cell in the first frequency band or the first frequency based on the first search information, and accesses the first cell based on the first search information. The first search information includes one or more of the following: a frequency of the first cell and a physical cell identity (identity, ID) of the first cell. When finding the cell, the first SIM card may send network search information (for example, a frequency or a physical cell ID of the found cell) of the first SIM card to the second SIM card in real time, to prevent the second SIM card from wasting a network search resource to search for a cell in a same frequency band or frequency, so that time and resources are reduced.

In a possible implementation, when the first SIM card finds the first cell in the first frequency band or the first frequency, the second SIM card skips searching for the cell in the first frequency band or the first frequency, and the second SIM card accesses the first cell. After obtaining information about the cell found by the first SIM card, the second SIM card may directly access the cell found by the first SIM card, to prevent the second SIM card from wasting a network search resource to search for a cell in a same frequency band or frequency, so that time and resources are reduced.

In a possible implementation, when the first SIM card finds the first cell in the first frequency band or the first frequency, the second SIM card skips searching for the cell in the first frequency band or the first frequency, and searches for a cell in a third frequency band or a third frequency, where the third frequency band or the third frequency belongs to the first standard, the second standard, or a third standard, and the third frequency band or the third frequency is preset in the terminal device. After obtaining information about the cell found by the first SIM card, the second SIM card may skip searching for a cell in a same frequency band or frequency, and search for a cell in another frequency band or frequency (for example, the third frequency band or the third frequency), so that time and resources are reduced while more candidate cells are obtained.

In a possible implementation, when the first SIM card fails to search for the cell in the first frequency band or the first frequency, the first SIM card sends second search information to the second SIM card, so that the second SIM card skips searching for the cell in the first frequency band or the first frequency based on the second search information. The second search information includes a frequency in which the second SIM card has searched for but has not found the cell in the first frequency band or the first frequency. When finding no cell, the first SIM card may send network search information (for example, a frequency in which a cell has been searched for but has not been found) of the first SIM card to the second SIM card in real time, to prevent the second SIM card from wasting a network search resource to search for a cell in a same frequency band or frequency, so that time and resources are reduced.

In a possible implementation, when the first SIM card fails to search for the cell in the first frequency band or the first frequency, the method further includes: The second SIM card searches for a cell in a third frequency band or a third frequency, where the third frequency band belongs to the first standard, the second standard, or a third standard, and the third frequency band or the third frequency is preset in the terminal device. After obtaining information about the frequency in which the first SIM card has searched for but has not found the cell, the second SIM card may skip searching for a cell in a same frequency band or frequency, and search for a cell in another frequency band or frequency (for example, the third frequency band or the third frequency), so that time and resources are reduced.

In a possible implementation, the first frequency band and the second frequency band each are a part of a preset frequency band. The preset frequency band may include a common frequency band allocated by a network to the terminal device, or a frequency band in which the terminal device frequently camps in a preset time period. This is not limited in this application.

In a possible implementation, the first frequency band and the second frequency band each are a part of a communications frequency band supported by the terminal device.

In a possible implementation, the preset condition includes: powering on or reconnecting to a network.

According to a second aspect, a terminal device is provided. The terminal device includes: a first network search unit and a second network search unit, where the first network search unit carries a first SIM card, and the second network search unit carries a second SIM card. The first network search unit is configured to: when the terminal device meets a preset condition, and the first SIM card and the second SIM card separately fail to search for a cell in a historical frequency, search for a cell in a first frequency band or a first frequency by using the first SIM card, where the first frequency band and the first frequency belong to a first standard; and the first frequency band or the first frequency is preset in the terminal device. The second network search unit is configured to: when the terminal device meets the preset condition, and the first SIM card and the second SIM card separately fail to search for a cell in a historical frequency, search for a cell in a second frequency band or a second frequency by using the second SIM card, where the second frequency band and the second frequency belong to the first standard or a second standard, and the second frequency band or the second frequency is preset in the terminal device. The second network search unit is further configured to: when the first network search unit fails to search for the cell in the first frequency band or the first frequency, skip searching for a cell in the first frequency band or the first frequency, where public land mobile networks PLMN of networks to which the first SIM card and the second SIM card belong are the same.

According to the technical solution provided in the second aspect, in an independent network search process, a plurality of subscriber identity module cards may share network search progress of the subscriber identity module cards in real time. For example, when finding a cell, the first SIM card may send network search information of the first SIM card to the second SIM card in real time, to prevent the second SIM card from wasting a network search resource to search for a cell in a same frequency band or frequency, so that time and resources are reduced.

In a possible implementation, the first network search unit is specifically configured to: when the first SIM card finds a first cell in the first frequency band or the first frequency, send first search information to the second network search unit, so that the second SIM card skips searching for the cell in the first frequency band or the first frequency based on the first search information, and accesses the first cell based on the first search information. The first search information includes one or more of the following: a frequency of the first cell and a physical cell ID of the first cell. When finding the cell, the first SIM card may send network search information (for example, a frequency or a physical cell ID of the found cell) of the first SIM card to the second SIM card in real time, to prevent the second SIM card from wasting a network search resource to search for a cell in a same frequency band or frequency, so that time and resources are reduced.

In a possible implementation, the second network search unit is specifically configured to: when the first SIM card finds the first cell in the first frequency band or the first frequency, control the second SIM card to skip searching for the cell in the first frequency band or the first frequency, and control the second SIM card to access the first cell. After obtaining information about the cell found by the first SIM card, the second SIM card may directly access the cell found by the first SIM card, to prevent the second SIM card from wasting a network search resource to search for a cell in a same frequency band or frequency, so that time and resources are reduced.

In a possible implementation, the second network search unit is specifically configured to: when the first SIM card finds the first cell in the first frequency band or the first frequency, control the second SIM card to skip searching for the cell in the first frequency band or the first frequency, and control the second SIM card to search for a cell in a third frequency band or a third frequency, where the third frequency band or the third frequency belongs to the first standard, the second standard, or a third standard, and the third frequency band or the third frequency is preset in the terminal device. After obtaining information about the cell found by the first SIM card, the second SIM card may skip searching for a cell in a same frequency band or frequency, and search for a cell in another frequency band or frequency (for example, the third frequency band or the third frequency), so that time and resources are reduced while more candidate cells are obtained.

In a possible implementation, the first network search unit is specifically configured to: when the first SIM card fails to search for the cell in the first frequency band or the first frequency, send second search information to the second network search unit, so that the second SIM card skips searching for the cell in the first frequency band or the first frequency based on the second search information. The second search information includes a frequency in which the second SIM card has searched for but has not found the cell in the first frequency band or the first frequency. When finding no cell, the first SIM card may send network search information (for example, a frequency in which a cell has been searched for but has not been found) of the first SIM card to the second SIM card in real time, to prevent the second SIM card from wasting a network search resource to search for a cell in a same frequency band or frequency, so that time and resources are reduced.

In a possible implementation, the second network search unit is further configured to: when the first SIM card fails to search for the cell in the first frequency band or the first frequency, control the second SIM card to search for a cell in a third frequency band or a third frequency, where the third frequency band belongs to the first standard, the second standard, or a third standard, and the third frequency band or the third frequency is preset in the terminal device. After obtaining information about the frequency in which the first SIM card has searched for but has not found the cell, the second SIM card may skip searching for a cell in a same frequency band or frequency, and search for a cell in another frequency band or frequency (for example, the third frequency band or the third frequency), so that time and resources are reduced.

In a possible implementation, the first frequency band and the second frequency band each are a part of a preset frequency band. The preset frequency band may include a common frequency band allocated by a network to the terminal device, or a frequency band in which the terminal device frequently camps in a preset time period. This is not limited in this application.

In a possible implementation, the first frequency band and the second frequency band each are a part of a communications frequency band supported by the terminal device.

In a possible implementation, the preset condition includes: powering on or reconnecting to a network.

According to a third aspect, a network search apparatus is provided. The network search apparatus includes: a first network search unit and a second network search unit, where the first network search unit carries a first SIM card, and the second network search unit carries a second SIM card. The first network search unit is configured to: when the terminal device meets a preset condition, and the first SIM card and the second SIM card separately fail to search for a cell in a historical frequency, search for a cell in a first frequency band or a first frequency by using the first SIM card, where the first frequency band and the first frequency belong to a first standard; and the first frequency band or the first frequency is preset in the network search apparatus. The second network search unit is configured to: when the terminal device meets the preset condition, and the first SIM card and the second SIM card separately fail to search for the cell in a historical frequency, search for a cell in a second frequency band or a second frequency by using the second SIM card, where the second frequency band and the second frequency belong to the first standard or a second standard, and the second frequency band or the second frequency is preset in the network search apparatus. The second network search unit is further configured to: when the first network search unit fails to search for the cell in the first frequency band or the first frequency, skip searching for a cell in the first frequency band or the first frequency, where public land mobile networks PLMN of networks to which the first SIM card and the second SIM card belong are the same.

According to the technical solution provided in the third aspect, in an independent network search process, a plurality of subscriber identity module cards may share network search progress of the subscriber identity module cards in real time. For example, when finding a cell, the first SIM card may send network search information of the first SIM card to the second SIM card in real time, to prevent the second SIM card from wasting a network search resource to search for a cell in a same frequency band or frequency, so that time and resources are reduced.

In a possible implementation, the first network search unit is specifically configured to: when the first SIM card finds a first cell in the first frequency band or the first frequency, send first search information to the second network search unit, so that the second SIM card skips searching for the cell in the first frequency band or the first frequency based on the first search information, and accesses the first cell based on the first search information. The first search information includes one or more of the following: a frequency of the first cell and a physical cell ID of the first cell. When finding the cell, the first SIM card may send network search information (for example, a frequency or a physical cell ID of the found cell) of the first SIM card to the second SIM card in real time, to prevent the second SIM card from wasting a network search resource to search for a cell in a same frequency band or frequency, so that time and resources are reduced.

In a possible implementation, the second network search unit is specifically configured to: when the first SIM card finds the first cell in the first frequency band or the first frequency, control the second SIM card to skip searching for the cell in the first frequency band or the first frequency, and control the second SIM card to access the first cell. After obtaining information about the cell found by the first SIM card, the second SIM card may directly access the cell found by the first SIM card, to prevent the second SIM card from wasting a network search resource to search for a cell in a same frequency band or frequency, so that time and resources are reduced.

In a possible implementation, the second network search unit is specifically configured to: when the first SIM card finds the first cell in the first frequency band or the first frequency, control the second SIM card to skip searching for the cell in the first frequency band or the first frequency, and control the second SIM card to search for a cell in a third frequency band or a third frequency, where the third frequency band or the third frequency belongs to the first standard, the second standard, or a third standard, and the third frequency band or the third frequency is preset in the network search apparatus. After obtaining information about the cell found by the first SIM card, the second SIM card may skip searching for a cell in a same frequency band or frequency, and search for a cell in another frequency band or frequency (for example, the third frequency band or the third frequency), so that time and resources are reduced while more candidate cells are obtained.

In a possible implementation, the first network search unit is specifically configured to: when the first SIM card fails to search for the cell in the first frequency band or the first frequency, send second search information to the second network search unit, so that the second SIM card skips searching for the cell in the first frequency band or the first frequency based on the second search information. The second search information includes a frequency in which the second SIM card has searched for but has not found the cell in the first frequency band or the first frequency. When finding no cell, the first SIM card may send network search information (for example, a frequency in which a cell has been searched for but has not been found) of the first SIM card to the second SIM card in real time, to prevent the second SIM card from wasting a network search resource to search for a cell in a same frequency band or frequency, so that time and resources are reduced.

In a possible implementation, the second network search unit is further configured to: when the first SIM card fails to search for the cell in the first frequency band or the first frequency, control the second SIM card to search for a cell in a third frequency band or a third frequency, where the third frequency band belongs to the first standard, the second standard, or a third standard, and the third frequency band or the third frequency is preset in the network search apparatus. After obtaining information about the frequency in which the first SIM card has searched for but has not found the cell, the second SIM card may skip searching for a cell in a same frequency band or frequency, and search for a cell in another frequency band or frequency (for example, the third frequency band or the third frequency), so that time and resources are reduced.

In a possible implementation, the first frequency band and the second frequency band each are a part of a preset frequency band. The preset frequency band may include a common frequency band allocated by a network to the terminal device, or a frequency band in which the terminal device frequently camps in a preset time period. This is not limited in this application.

In a possible implementation, the first frequency band and the second frequency band each are a part of a communications frequency band supported by the terminal device.

In a possible implementation, the preset condition includes: powering on or reconnecting to a network.

According to a fourth aspect, a terminal device is provided. The terminal device carries a first SIM card and a second SIM card. The terminal device includes: a memory, configured to store a computer program; a transceiver, configured to receive or send a radio signal; and a processor, configured to execute the computer program, so that the terminal device implements the method according to any possible implementation of the first aspect.

According to a fifth aspect, a computer-readable storage medium is provided. The computer-readable storage medium stores computer program code, and when the computer program code is executed by a processor, the method according to any possible implementation of the first aspect is implemented.

According to a sixth aspect, a chip system is provided. The chip system includes a processor and a memory, where the memory stores computer program code, and when the computer program code is executed by the processor, the method according to any possible implementation of the first aspect is implemented. The chip system may include a chip, or may include a chip and another discrete component.

According to a seventh aspect, a computer program product is provided. When the computer program product is run on a computer, the method according to any possible implementation of the first aspect is implemented.

### BRIEF DESCRIPTION OF DRAWINGS

FIG. 1 is an example diagram of an architecture of a communications system to which an embodiment of this application is applicable;
FIG. 2 is a schematic diagram of a hardware structure of a multi-card terminal device according to an embodiment of this application;
FIG. 3 is a schematic diagram of a structure of a radio frequency module of a dual-card terminal device according to an embodiment of this application;
FIG. 4 is an example diagram of a frame structure according to an embodiment of this application;
FIG. 5 is an example flowchart depicting that a subscriber identity module card performs downlink synchronization and determines a PCI according to an embodiment of this application;
FIG. 6 is a flowchart of a network search method in a multi-card mode according to an embodiment of this application;
FIG. 7 is a flowchart of a network search method in a multi-card mode corresponding to different shared information according to an embodiment of this application;
FIG. 8A to FIG. 8C are a flowchart 1 of a network search method in a multi-card mode in a preset network search sequence according to an embodiment of this application;
FIG. 9A to FIG. 9C are a flowchart 2 of a network search method in a multi-card mode in a preset network search sequence according to an embodiment of this application;
FIG. 10A to FIG. 10E are a flowchart of a network search method in a multi-card mode in a preset network standard sequence and a preset frequency band sequence according to an embodiment of this application;
FIG. 11A and FIG. 11B are a flowchart 3 of a network search method in a multi-card mode in a preset network search sequence according to an embodiment of this application;
FIG. 12A and FIG. 12B are a flowchart 1 of a network search method in a multi-card mode in a task allocation mode according to an embodiment of this application;
FIG. 13A and FIG. 13B are a flowchart 2 of a network search method in a multi-card mode in a task allocation mode according to an embodiment of this application; and
FIG. 14 is a block diagram of a structure of a terminal device according to an embodiment of this application.

### DESCRIPTION OF EMBODIMENTS

The following describes the technical solutions in embodiments of this application with reference to the accompanying drawings in embodiments of this application.

To make the objectives, technical solutions, and advantages of this application clearer, the following further describes this application in detail with reference to the accompanying drawings.

Terms such as "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this application, position terms such as "top" and "bottom" are defined relative to positions of components in the accompanying drawings. It should be understood that these position terms are relative concepts used for relative description and clarification, and may correspondingly change based on changes in the positions of the components in the accompanying drawings.

An embodiment of this application provides a network search method in a multi-card mode. The method is applied to a network search process of a terminal device that supports at least two subscriber identity module cards (such as a SIM card or a universal subscriber identity module (universal subscriber identity module, USIM) card), and the network search process includes a process of searching for a network after the terminal device is powered on, a process of searching for a network after the terminal device goes online again, and the like.

The subscriber identity module card is not limited to a physical subscriber identity module card, or may be a virtual subscriber identity module card. This is not limited in this application.

For example, the subscriber identity module card in this application may be any one of subscriber identity module cards such as a SIM card, a universal subscriber identity module (universal subscriber identity module, USIM) card, a removable subscriber identity module (removable user identity module, RUIM) card, a user identity module (user identity module, UIM) card, an embedded subscriber identity module (embedded SIM, eSIM) card, or a virtual subscriber identity module (virtual SIM, vSIM) card. For details, refer to descriptions in the conventional technology. Details are not described herein in this application.

In the following embodiments of this application, a network search method in a multi-card mode provided in this application is specifically described by using a SIM as an example. It should be noted that the network search method in the multi-card mode provided in this application is applicable to a terminal device including a plurality of subscriber identity module cards of any type in the conventional technology.

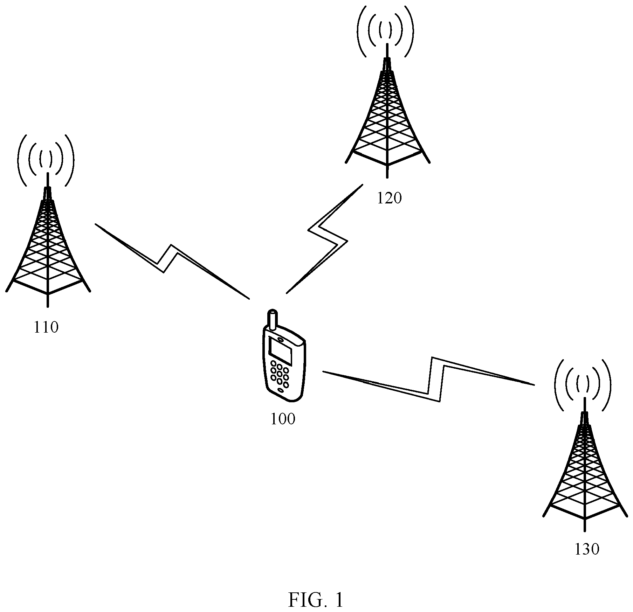

FIG. 1 is a schematic diagram of an example of an architecture of a communications system to which an embodiment of this application is applicable. The communications system may include a plurality of base stations and a plurality of terminal device. Each base station may support any one or more of operator networks such as China Mobile, China Unicom, and China Telecom. The terminal device supports simultaneous standby of at least two SIM cards.

As shown in FIG. 1, the system architecture includes a base station 110, a base station 120, a base station 130, and a terminal device 100. For example, the terminal device 100 supports a SIM card 1 and a SIM card 2. Operator networks to which the SIM card 1 and the SIM card 2 belong may be the same or may be different. Each SIM card may be attached to a cell served by a base station of an operator network to which the SIM card belongs.

For example, both the SIM card 1 and the SIM card 2 are SIM cards of China Mobile, and the base station 110, the base station 120, and the base station 130 all support a China Mobile operator network. In this case, the SIM card 1 and the SIM card 2 included in the terminal 100 may be attached to any cell served by the base station 110, the base station 120, or the base station 130. For example, the SIM card 1 and the SIM card 2 may be respectively attached to a cell served by the base station 110 and a cell served by the base station 130. For another example, the SIM card 1 and the SIM card 2 may be simultaneously attached to a cell served by the base station 130.

For another example, both the SIM card 1 and the SIM card 2 are SIM cards of China Mobile, the base station 110 supports a China Mobile operator network, and both the base station 120 and the base station 130 support a China Telecom operator network. In this case, both the SIM card 1 and the SIM card 2 may be attached to a cell served by the base station 110, but cannot be attached to cells served by the base station 120 and the base station 130.

For another example, the SIM card 1 is a SIM card of China Telecom, the SIM card 2 is a SIM card of China Mobile, the base station 110 and the base station 120 support a China Telecom operator network, and the base station 130 supports a China Mobile operator network. In this case, the SIM card 1 may be attached to a cell served by the base station 110 or the base station 120, and the SIM card 2 may be attached to a cell served by the base station 130.

In this application, a cell to which a SIM card is attached may be a cell of any network standard. For example, the SIM card may be attached to a cell of any network standard such as a GSM, WCDMA, time division-synchronous code division multiple access (time division-synchronous code division multiple access, TD-SCDMA), CDMA, LTE (for example, time division duplexing (TDD)) -LTE, frequency division duplexing (frequency division duplexing, FDD) -LTE), or NR.

For a same operator, different network standards correspond to different frequency bands. For example, an uplink frequency band corresponding to the WCDMA of China Unicom is 1940 MHz-1955 MHz (megahertz), and a downlink frequency band corresponding to the WCDMA of China Unicom is 2130 MHz-2145 MHz. Frequency bands corresponding to the TDD-LTE of China Unicom are 2555 MHz-2575 MHz and 2300 MHz-2320 MHz (only for indoor use). An uplink frequency band corresponding to the FDD-LTE of China Unicom is 1755-1765 MHz, and a downlink frequency band corresponding to the FDD-LTE of China Unicom is 1850-1860 MHz.

In addition, for different operators, different network standards correspond to different frequency bands. For example, uplink frequency bands corresponding to the GSM of China Mobile are 890-909 MHz and 1710-1725 MHz, and downlink frequency bands corresponding to the GSM of China Mobile are 935-954 MHz and 1805-18205 MHz. Uplink frequency bands corresponding to the GSM of China Unicom are 909-915 MHz (megahertz) and 1745-1755 MHz, and downlink frequency bands are 954-960 MHz and 1840-1850 MHz.

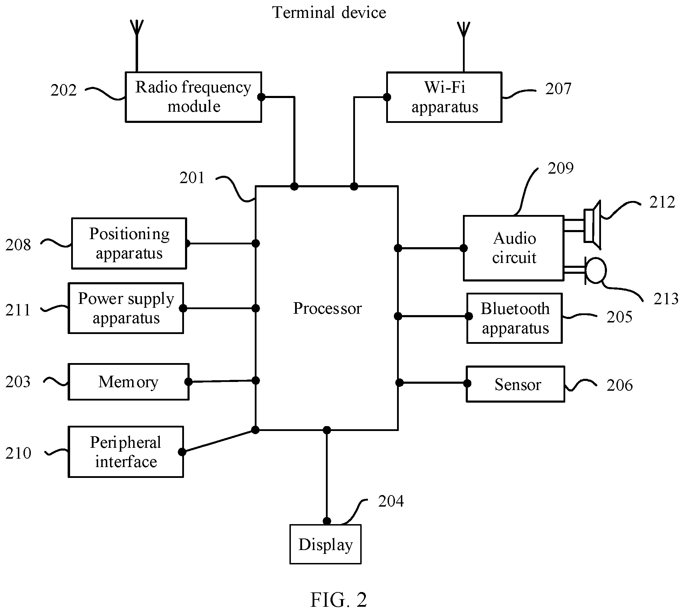

FIG. 2 is a schematic diagram of a hardware structure of a multi-card terminal device according to an embodiment of this application. As shown in FIG. 2, the terminal device may include but is not limited to one or more of components such as at least one processor 201, a radio frequency module 202, a memory 203, a display 204, a Bluetooth apparatus 205, one or more sensors 206, a Wi-Fi apparatus 207, a positioning apparatus 208, an audio circuit 209, a peripheral interface 210, and a power supply apparatus 211, a speaker 212, and a microphone 213. The components included in the terminal device may perform communication by using one or more communications buses or signal cables, for example, a controller area network (controller area network, CAN) bus (not shown in FIG. 2). A person skilled in the art may understand that a hardware structure shown in FIG. 2 does not constitute a limitation on the terminal device. The terminal device may include more or fewer components than those shown in the figure, or some components may be combined, or the components may be disposed in a different manner.

The following describes the components of the terminal device in detail with reference to FIG. 2.

The processor 201 may be a control center of the terminal device, is connected to other parts of the terminal device by using various interfaces and lines, and executes various functions of the terminal device by running or executing a computer program stored in the memory 203.

In some embodiments, the processor 201 may be a general-purpose central processing unit (central processing unit, CPU), a microprocessor, an application-specific integrated circuit (application-specific integrated circuit, ASIC), or one or more integrated circuits configured to control program execution in the solutions of this application. The processor 201 may include one or more CPUs.

The radio frequency module 202 may be configured to receive and send a radio signal. Particularly, the radio frequency module 202 may receive downlink data from a base station, and send the downlink data to the processor 201 for processing. In addition, the radio frequency module 202 may further send uplink data to the base station.

Generally, the radio frequency module 202 includes but is not limited to an antenna and a radio frequency circuit. For example, the radio frequency circuit may include at least one amplifier, a transceiver, a coupler, a low noise amplifier, a duplexer, and the like. In addition, the radio frequency module 202 may further communicate with another device through wireless communication. The wireless communication may use any communication standard or protocol, including but not limited to a global system for mobile communications, a general packet radio service, code division multiple access, wideband code division multiple access, long term evolution, an e-mail message, a short message service, and the like.

The memory 203 is configured to store the computer program, and may further be configured to store data. The memory 203 may be a read-only memory (read-only memory, ROM) or a random access memory (random access memory, RAM), or may be an electrically erasable programmable read-only memory (electrically erasable programmable read-only memory, EEPROM), a compact disc read-only memory (compact disc read-only memory, CD-ROM) or another compact disc storage device, an optical disc storage device (including a compact disc, a laser disc, an optical disc, a digital versatile disc, a Blu-ray disc, or the like), a magnetic disk storage medium or another magnetic storage device, or any other medium that can be used for carrying or storing program code and that can be accessed by a computer, but is not limited thereto.

The processor 201 may execute various functions of the radio frequency module 202 and perform data processing by running the computer program stored in the memory 203.

The memory 203 may include a program storage area and a data storage area. The program storage area may store an operating system and an application required by at least one function. The data storage area may store data created when the processor 201 operates.

The memory 203 may store a computer program for implementing a modular function, and execution of the computer program is controlled by the processor 201. The processor 201 is configured to execute the computer program stored in the memory 203, to implement the methods provided in the following embodiments of this application. In addition, the memory 203 may include a high-speed random access memory, and may further include a nonvolatile memory such as a magnetic disk storage device and a flash memory, or another volatile solid-state storage device. The memory 203 may store various operating systems, for example, an iOS operating system and an Android operating system.

The display 204 is configured to display an image, a video, and the like.

The audio circuit 209, the speaker 212, and the microphone 213 may provide an audio interface between a user and the terminal device. The audio circuit 209 may convert received audio data into an electrical signal and then transmit the electrical signal to the speaker 212. The speaker 212 converts the electrical signal into a sound signal for output. In another aspect, the microphone 213 converts a collected sound signal into an electrical signal. The audio circuit 209 receives the electrical signal, converts the electrical signal into audio data, and then outputs the audio data to the radio frequency module 202, to send the audio data to, for example, another device, or outputs the audio data to the memory 203 for further processing.

It should be understood that hardware modules included in the terminal device shown in FIG. 2 are merely examples for description, and constitute no limitation on this application. In actual application, the terminal device provided in embodiments of this application may further include another hardware module that has an interaction relationship with the hardware modules shown in the figure, although not shown in FIG. 2. For example, the terminal device may further include another apparatus such as a near field communication (near field communication, NFC) apparatus or a flash. This is not specifically limited herein.

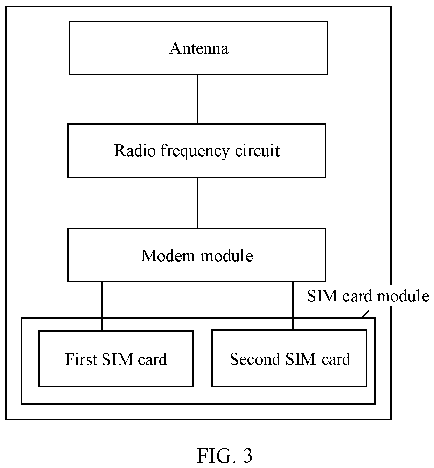

For example, the terminal device supports two physical SIM cards (for example, a SIM card 1 and a SIM card 2). As shown in FIG. 3, a radio frequency module of the dual-card terminal device may include an antenna and a radio frequency circuit connected to the antenna. During specific implementation, the radio frequency circuit performs signal processing based on a baseband radio frequency interface protocol. The baseband radio frequency interface protocol standard includes but is not limited to a 2G standard, a 3G standard, a 4G standard, a 5G standard, a next-generation standard, or the like, so that the card 1 and the card 2 can support a plurality of network standards. For example, the 2G standard includes a GSM standard and a CDMA standard. The 3G standard includes a WCDMA standard, a CDMA2000 standard, and a time division synchronous code division multiple access (time division synchronous code division multiple access, TD-SCDMA) standard. The 4G standard includes a time division duplex LTE (time division duplex LTE, TDD-LTE) standard and a frequency division duplex (frequency division duplex LTE, FD-LTE) standard. The 5G standard includes an NR standard. Generally, as shown in FIG. 3, a SIM card module (including a first SIM card and a second SIM card) is connected to another module (for example, the radio frequency circuit) of the terminal device by using a modem (modem) module. Generally, the modem module is configured to receive, demodulate, and decode a radio signal, and encode, modulate, and send a signal, to perform data communication.

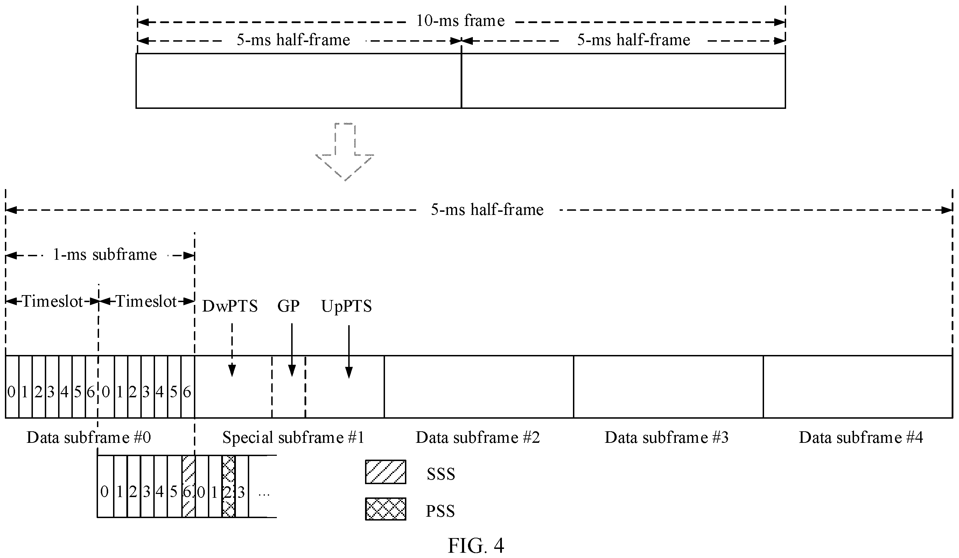

For ease of understanding, terms that may appear in embodiments of this application are explained below.
(1) Frame structure: A frame structure of a TDD-LTE system is used as an example. Based on a definition in the 3rd generation partnership project (The 3rd Generation Partnership Project, 3GPP), for the frame structure of the TDD-LTE system, refer to FIG. 4.
   For example, one 10-ms frame is divided into two 5-ms half-frames. As shown in FIG. 4, each 5-ms half-frame includes four 1-ms data subframes (a subframe #0, a subframe #2, a subframe #3, and a subframe #4 shown in FIG. 4) and one 1-ms special subframe (a special subframe #1 shown in FIG. 4). Each 1-ms data subframe may be divided into two 0.5-ms timeslots, and each 0.5-ms timeslot may be further divided into seven orthogonal frequency division multiplexing (Orthogonal Frequency Division Multiplexing, OFDM) symbols (symbol). The special subframe includes three special timeslots: a downlink pilot timeslot (DwPTS), a guard period (GP), and an uplink pilot timeslot (UpPTS). Lengths of the three special timeslots support nine types of configuration options. Generally, a length of the UpPTS is 1 to 2 OFDM symbols, a length of the DwPTS is 3 to 12 OFDM symbols, and a length of the GP is 1 to 10 OFDM symbols.
(2) Synchronization signal: The TDD-LTE system is used as an example, and a synchronization signal in the TDD-LTE system includes a primary synchronization signal (primary synchronization signal, PSS) and a secondary synchronization signal (secondary synchronization signal, SSS).
(3) PSS: The PSS is used to quickly determine a start location of a symbol/frame during cell search, that is, symbol timing synchronization. The TDD-LTE system is used as an example. As shown in FIG. 1, the PSS is usually located in the third OFDM symbol in each of the subframe #1 and a subframe #6. The subframe #6 is the second 1-ms subframe in the second 5-ms half-frame in the 10-ms frame.
   Generally, the base station associates a value of an intra-group identifier N_{ID}⁽²⁾ (where a value range is 0 to 2) with one root sequence index u, then generates, through encoding, one ZC sequence du⁽ⁿ⁾ whose length is 62, and maps the ZC sequence du⁽ⁿ⁾ to an RE (resource element) corresponding to the PSS. The terminal device may blindly detect the sequence to obtain N_{ID}⁽²⁾ of a current cell.
(4) SSS: The SSS is mainly used together with a PSS to determine a physical cell ID. The TDD-LTE system is used as an example, and the SSS is usually located in the last OFDM symbol in each of the subframe #0 and a subframe #5. In other words, the SSS is three OFDM symbols ahead of the PSS. The subframe #5 is the first 1-ms subframe in the second 5-ms half-frame in the 10-ms frame.

Generally, the base station generates two index values m0 and m1 by using a value of a group identifier N_{ID}⁽¹⁾ (where a value range is 0 to 167), then uses the value of the intra-group identifier N_{ID}⁽²⁾ to generate, through encoding, two sequences d⁽²ⁿ⁾ and d⁽²ⁿ⁺¹⁾ whose lengths are both 31, and maps the two sequences to an RE of the SSS. The terminal device may learn, by blindly detecting the sequences, which sequence is currently delivered by the base station, to obtain N_{ID}⁽¹⁾ of the current cell.

It should be noted that FIG. 4 merely uses the frame structure of the TDD-LTE system as an example, and different network standards may correspond to different frame structures. Alternatively, different network standards may correspond to a same frame structure, but the PSS and/or the SSS may be in different locations in the frame structure. For example, in an FDD-LTE system, the PSS is usually sent in the last OFDM symbol of the first timeslot in a subframe #0, and the SSS is usually sent in the penultimate OFDM symbol of the second timeslot in a subframe #0. A specific frame structure and specific locations of the PSS and the SSS in the frame structure are not limited in this application.

(5) Physical cell identity (physical cell identities, PCI): The physical cell identity is used to distinguish between radio signals of different cells at a physical layer, and is an important parameter used at the physical layer for randomized interference of a plurality of types of signals and channels between cells.

For example, an LTE communications system provides 504 PCIs. When a network management system is configured, a network configures one number ranging from 0 to 503 for a cell. The 504 PCIs are divided into 168 different groups (denoted as N_{ID}⁽¹⁾, with a value range of 0 to 167), and each group includes three different intra-group identifiers (denoted as N_{ID}⁽²⁾, with a value range of 0 to 2).

The PCI may be obtained through calculation according to the following formula: PCI = N_{ID}^{cell} = 3N_{ID}⁽¹⁾ + N_{ID}⁽²⁾. Therefore, in an LTE cell search procedure, a specific PCI may be determined by blindly detecting the PSS and the SSS. For a manner of obtaining N_{ID}⁽¹⁾ and N_{ID}⁽²⁾, refer to the foregoing descriptions.

(6) Cell search: Generally, the cell search aims to obtain a physical cell identity (identities, ID) and perform downlink synchronization. For example, for a 4G network and a 5G network, the physical cell ID is a PCI.

Downlink synchronization may include symbol synchronization, frame synchronization, and frequency synchronization. As described above, because the PSS and the SSS usually have fixed time domain locations in the frame structure, frame structure synchronization, namely, frame synchronization and symbol synchronization, may be obtained by detecting the PSS and the SSS and comparing relative locations of the two signals. In addition, because the PSS and the SSS usually fixedly occupy fixed subcarriers (for example, 72 subcarriers) in the middle of a frequency band, locations of the 72 subcarriers in the middle and a center frequency may be obtained by demodulating the PSS and the SSS, to obtain frequency synchronization.

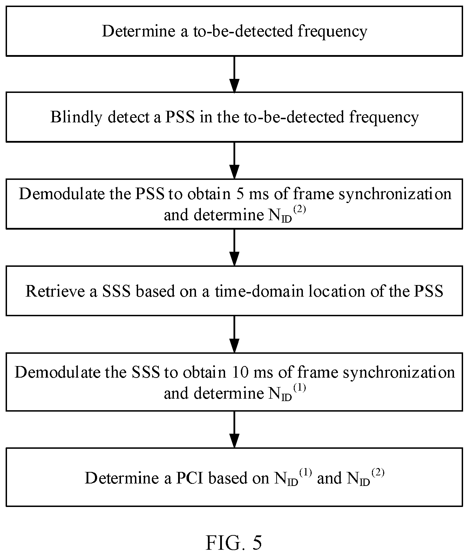

FIG. 5 is an example flowchart depicting that a subscriber identity module card performs downlink synchronization and determines a PCI by using an LTE system as an example. As shown in FIG. 5, after determining a to-be-detected frequency, a terminal device first blindly detects a PSS in the to-be-detected frequency. Then, the terminal device determines a location of the PSS in a 5-ms frame by demodulating the PSS, to obtain 5 ms of frame synchronization and determine N_{ID}⁽²⁾ of a current cell. A PSS and an SSS usually have fixed time domain locations in a frame structure. Therefore, the terminal device then retrieves an SSS based on a time domain location of the PSS. Then, the terminal device determines relative locations of the PSS and the SSS in a 10-ms frame by demodulating the SSS, to obtain 10 ms of frame synchronization and determine N_{ID}⁽¹⁾ of the current cell. Finally, according to the formula: PCI = N_{ID}^{cell} = 3N_{ID}⁽¹⁾ + N_{ID}⁽²⁾, the terminal device obtains a PCI through calculation based on the determined N_{ID}⁽¹⁾ and N_{ID}⁽²⁾.

It should be noted that, in the flowchart shown in FIG. 5, only the procedure depicting that a subscriber identity module card performs downlink synchronization and determines a PCI in the LTE system is used as an example. A specific method and procedure for performing downlink synchronization and determining a PCI are not limited in this application. For specific network search processes of different network standards, refer to descriptions in the conventional technology.

An embodiment of this application provides a network search method in a multi-card mode. Network search aims to find a cell. In the network search method in the multi-card mode provided in this application, a terminal device performs a network search procedure when meeting a preset condition. In the network search procedure, in an independent network search process, a plurality of subscriber identity module cards may share network search progress of the subscriber identity module cards in real time. For example, when finding a cell, a first SIM card (hereinafter referred to as a SIM card 1) may send network search information (namely, shared information) of the SIM card 1 to a second SIM card (hereinafter referred to as a SIM card 2) in real time, to prevent the SIM card 2 from wasting a network search resource to search for a cell in a same frequency, so that time and resources are reduced.

The network search information may include but is not limited to related information of the found cell and/or information about a frequency in which a cell has been searched for but has not been found. The preset condition may include but is not limited to: The terminal device is powered on or goes online again.

The following specifically describes the network search method in the multi-card mode provided in this embodiment of this application by using an example in which the terminal device includes two physical SIM cards (for example, the SIM card 1 and the SIM card 2). The terminal device includes a first SIM card module and a second SIM card module. The first SIM card module includes the SIM card 1, and the second SIM card module includes the SIM card 2. The SIM card 1 and the SIM card 2 belong to a same operator, that is, public land mobile networks (public land mobile network, PLMN) of networks to which the SIM card 1 and the SIM card 2 belong are the same. After the terminal device is powered on or goes online again, the first SIM card and the second SIM card of the terminal device separately start to search for a cell.

In some embodiments, the first SIM card and the second SIM card first search for a cell in respective historical frequencies. If network search is performed after the terminal device is powered on, the historical frequency may include a frequency of a cell in which the SIM card camps before the terminal device is powered off most recently. If network search is performed after the terminal device goes online again, the historical frequency may include a frequency of a cell in which the SIM card camps before the terminal device goes offline most recently. For example, the historical frequency of the first SIM card is a first historical frequency, and the historical frequency of the second SIM card is a second historical frequency.

If the first SIM card fails to search for a cell in the first historical frequency, and the second SIM card fails to search for a cell in the second historical frequency, the first SIM card and the second SIM card perform a subsequent network search procedure according to the network search method in the multi-card mode provided in this embodiment of this application.

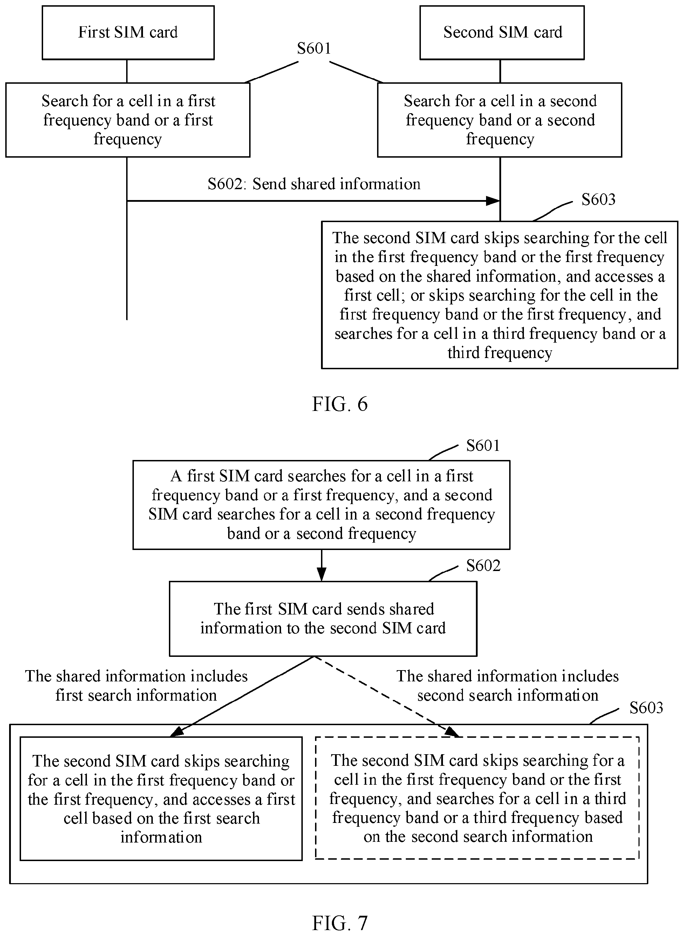

FIG. 6 is a schematic flowchart of a network search method in a multi-card mode according to an embodiment of this application. As shown in FIG. 6, the network search method in the multi-card mode provided in this embodiment of this application may include the following steps S601 to S603.

S601: The first SIM card searches for a cell in a first frequency band or a first frequency, and the second SIM card searches for a cell in a second frequency band or a second frequency.

The first frequency band or the first frequency is preset in the terminal device, and the second frequency band or the second frequency is preset in the terminal device. The first frequency band or the first frequency belongs to a first standard, and the second frequency band or the second frequency belongs to the first standard or a second standard. For example, the first standard and the second standard may be any network standard such as a GSM, WCDMA, TD-SCDMA, CDMA, LTE (for example, TDD-LTE or FDD-LTE), or NR.

For example, the first frequency band and the second frequency band each may be a part of a preset frequency band. Alternatively, the first frequency band and the second frequency band each may be a part of a communications frequency band supported by the terminal device. This is not limited in this application.

In some embodiments, the first standard may be the same as the second standard.

In some other embodiments, the first standard is different from the second standard.

S602: The first SIM card sends shared information to the second SIM card.

The shared information may include first search information and/or second search information. The first search information includes cell information of a cell found by the first SIM card in the first frequency band or the first frequency. The second search information includes a frequency in which the first SIM card has searched for but has not found a cell in the first frequency band or the first frequency.

In this application, the cell information may include but is not limited to one or more of a frequency (for example, 1857 MHz) and a physical cell ID (for example, a PCI 490) that are of a cell found by the first SIM card. Frequency information may include but is not limited to a frequency (for example, 1859 Hz) in which the first SIM card has searched for but has not found a cell.

In some embodiments, the cell information may further include a network standard (for example, FDD-LTE) to which a cell found by the first SIM card belongs, and the frequency information may further include a network standard (for example, FDD-LTE) corresponding to the frequency in which the first SIM card has searched for but has not found the cell. Alternatively, the shared information may further include another related information. This is not limited in this application.

It should be noted that the frequency of the cell included in the cell information or the frequency included in the frequency information may also be represented by a frequency number. The network standard to which the cell belongs or the network standard corresponding to the frequency may also be represented by network standard identifier information. For example, "0" is used to represent FDD-LTE, and "1" is used to represent TDD-LTE. A specific representation form of each piece of specific information in the shared information is not limited in this application.

In some embodiments, the first SIM card may send shared information to the second SIM card when finding a cell (for example, first information) in the first frequency band or the first frequency. The shared information includes first search information.

In some embodiments, the first SIM card may send shared information to the second SIM card when finding a cell (for example, first information) in the first frequency band or the first frequency. The shared information includes first search information and second search information.

In some other embodiments, the first SIM card may send shared information to the second SIM card when ending cell search in the first frequency band or the first frequency. The shared information includes second information.

S603: The second SIM card skips searching for the cell in the first frequency band or the first frequency based on the shared information, and accesses a first cell; or skips searching for the cell in the first frequency band or the first frequency, and searches for a cell in a third frequency band or a third frequency.

The third frequency band or the third frequency is preset in the terminal device. The third frequency band or the third frequency belongs to the first standard, the second standard, or a third standard. This is not limited in this application. The third standard may be any network standard such as a GSM, WCDMA, TD-SCDMA, CDMA, LTE (for example, TDD-LTE or FDD-LTE), or NR. The third standard is different from the first standard and the second standard.

It may be understood that, because the SIM card 1 and the SIM card 2 are located at a same place and belong to a same operator, there is a high probability that a cell that can be found by the first SIM card can also be found by the second SIM card. Therefore, in a network search process, the first SIM card and the second SIM card share respective network search progress in real time for mutual reference, so that time and resources can be greatly reduced.

As described above, the shared information may include the first search information and/or the second search information. On this basis, the following separately describes a specific implementation process of step S603 by using three cases of the shared information: a case (1), a case (2), and a case (3).

Case (1): The shared information includes first search information.

For example, when the first SIM card finds the first cell in the first frequency band or the first frequency, the first SIM card sends the first search information to the second SIM card, so that the second SIM card skips searching for the cell in the first frequency band or the first frequency based on the first search information, and accesses the first cell based on the first search information. The first search information includes one or more of the following: a frequency of the first cell and a physical cell ID of the first cell.

For the case (1), as shown in FIG. 7, step S603 may specifically include: The second SIM card skips searching for the cell in the first frequency band or the first frequency based on the first search information, and accesses the first cell. For example, when the first search information includes a physical cell ID of a cell (for example, the first cell) found by the first SIM card, step S603 may specifically include: The second SIM card skips searching for the cell in the first frequency band or the first frequency based on the first search information, and accesses the cell (that is, the first cell) corresponding to the physical cell ID.

For another example, when the first search information includes a frequency of a cell (for example, the first cell) found by the first SIM card, step S603 may specifically include: The second SIM card skips searching for the cell in the first frequency band or the first frequency based on the first search information, and accesses the cell (that is, the first cell) corresponding to the frequency.

In some embodiments, to ensure that the second SIM card can successfully access the first cell, the second SIM card may further search for a cell based on the first search information after receiving the first search information. If the second SIM card finds the first cell, the second SIM card accesses the first cell. That is, step S603 may specifically include: The second SIM card searches for the first cell based on the first search information.

For example, when the first search information includes a physical cell ID of a cell (for example, the first cell) found by the first SIM card, the second SIM card may search for a cell corresponding to the physical cell ID. If the second SIM card finds the first cell, the second SIM card accesses the first cell.

For another example, when the first search information includes a frequency of a cell (for example, the first cell) found by the first SIM card, the second SIM card may search for a cell corresponding to the frequency. If the second SIM card finds the first cell, the second SIM card accesses the first cell.

Case (2): The shared information includes second search information.

For example, when the first SIM card fails to find the cell in the first frequency band or the first frequency, the first SIM card sends the second search information to the second SIM card, so that the second SIM card skips searching for the cell in the first frequency band or the first frequency based on the second search information. The second search information includes a frequency in which the second SIM card has searched for but has not found the cell in the first frequency band or the first frequency.

For the case (2), as shown in FIG. 7, step S603 may specifically include: The second SIM card skips searching for the cell in the first frequency band or the first frequency based on the second search information, and searches for a cell in the third frequency band or the third frequency.

The third frequency band or the third frequency belongs to the first standard, the second standard, or the third standard.

In some embodiments, the second SIM card skips searching for the cell in the first frequency band or the first frequency based on the second search information, and continues to perform the previous network search in the first standard or the second standard, that is, searches for the cell in the third frequency band or the third frequency. The third frequency band or the third frequency belongs to the first standard or the second standard.

In some other embodiments, the second SIM card skips searching for the cell in the first frequency band or the first frequency based on the second search information, and performs network search in another standard, that is, searches for the cell in the third frequency band or the third frequency. The third frequency band or the third frequency belongs to the third standard.

In some other embodiments, the second SIM card may adjust a frequency priority based on the second search information, and search for the cell in the third frequency band or the third frequency based on the frequency priority. The third frequency band or the third frequency belongs to the first standard. A priority level of the frequency in which the first SIM card has searched for but has not found the cell in the first frequency band or the first frequency is "low".

It should be noted that the priority level "low" is merely used as an example, and is merely used to indicate that the second SIM card sets a relatively low priority level of the frequency in which the first SIM card has searched for but has not found the cell in the first frequency band or the first frequency. This specifically depends on a specific classification of priority levels set by the second SIM card. For example, the priority level of the frequency in which the first SIM card has searched for but has not found the cell in the first frequency band or the first frequency may alternatively be "relatively low", "lowest", or the like. This is not limited in this application.

It should be noted that, in the foregoing embodiment, the second SIM card directly uses a network search result of the first SIM card. In some embodiments, the second SIM card may further obtain a plurality of cells through search, to select an optimal cell for camping from the plurality of found cells.

For example, for the case (1), the second SIM card may alternatively use the first cell indicated by the first search information as a candidate camped cell, and search for the cell in the third frequency band or the third frequency, to find more candidate camped cells for selection. The third frequency band or the third frequency belongs to the first standard, the second standard, or the third standard.

Alternatively, when the shared information includes the first search information and the second search information, the second SIM card may use the first cell indicated by the first search information as a candidate camped cell, adjust a frequency priority based on the second search information, and search for the cell in the third frequency band or the third frequency based on the frequency priority, to find more candidate camped cells for selection. A priority level of the frequency in which the first SIM card has searched for but has not found the cell in the first frequency band or the first frequency is "low".

It should be noted that the foregoing embodiment of this application is described by using an example in which the first SIM card sends the shared information to the second SIM card. The second SIM card may also send the shared information to the first SIM card, and the shared information is used as a reference for the first SIM card to perform network search. For example, the first SIM card accesses a cell found by the second SIM card or search for a cell in a fourth frequency band or a fourth frequency, so that time and resources are reduced. The fourth frequency band or the fourth frequency is preset in the terminal device. The fourth frequency band or the fourth frequency may belong to the first standard, the second standard, or the third standard.

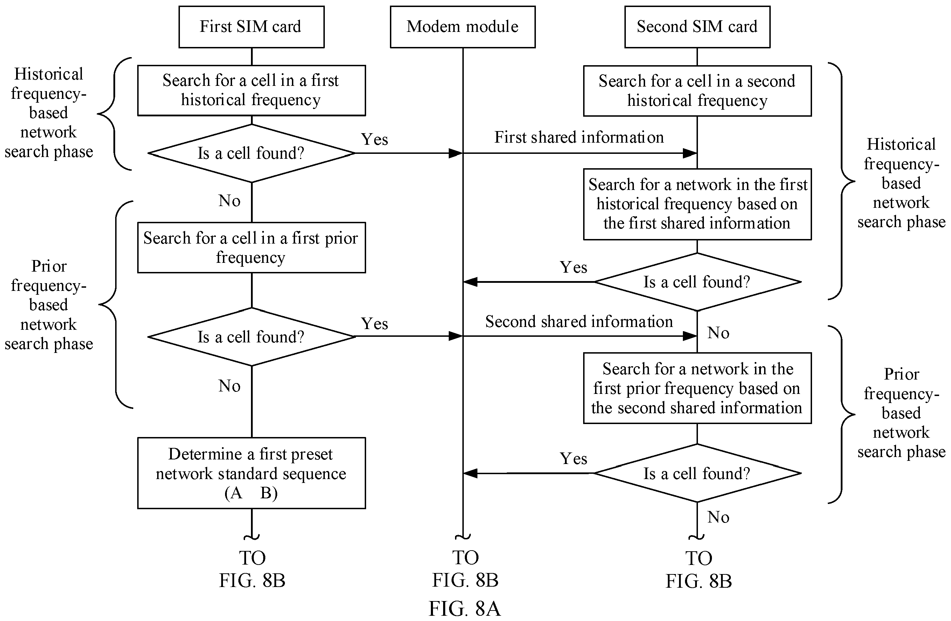

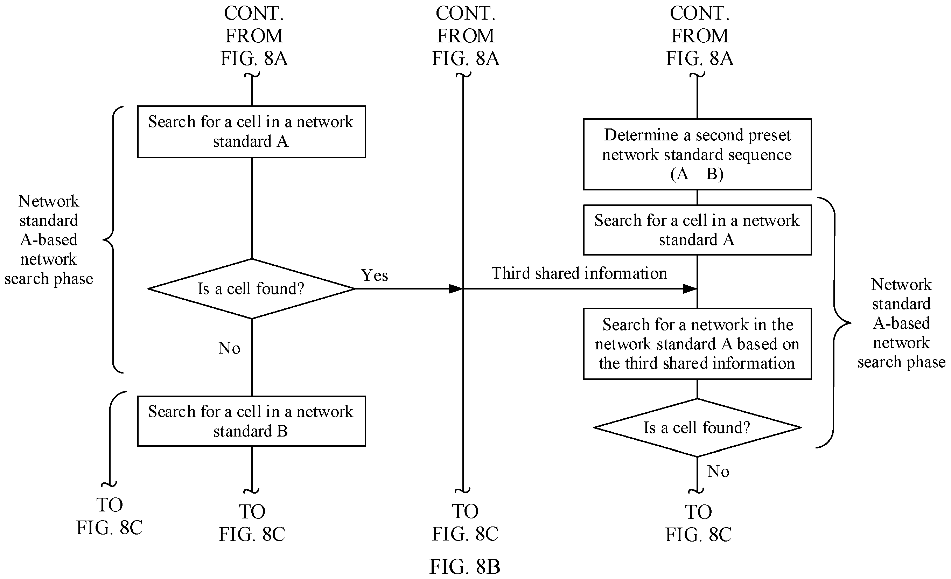

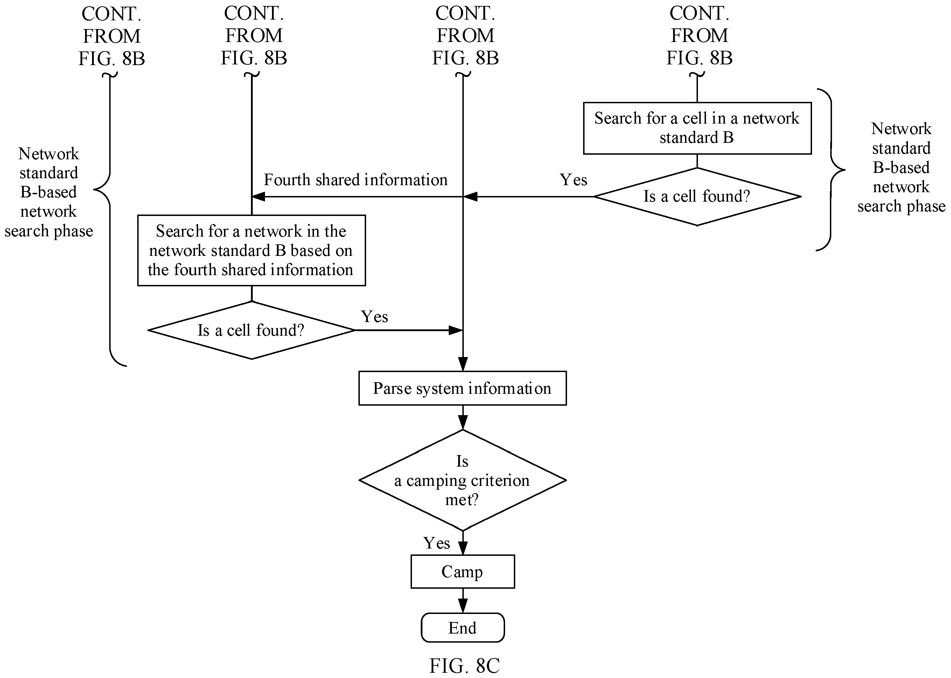

As described above, after the terminal device is powered on or goes online again, the first SIM card and the second SIM card of the terminal device usually first search for a cell in respective historical frequencies. For example, as shown in FIG. 8, FIG. 9, FIG. 10, FIG. 11, FIG. 12, or FIG. 13, the first SIM card and the second SIM card respectively search for a cell in a first historical frequency and a second historical frequency.

In some embodiments, in a process in which the first SIM card and the second SIM card separately search for a network in respective historical frequencies, if either of the first SIM card and the second SIM card finds a cell, the first SIM card or the second SIM card may also send shared information to the first SIM card or the second SIM card in real time, so that the first SIM card or the second SIM card can perform cell search by referring to the shared information. This reduces time and computing power.

As shown in FIG. 8A, FIG. 9A, FIG. 10A, FIG. 11A, FIG. 12A, or FIG. 13A, in a historical frequency-based network search phase, if the first SIM card finds the cell in the first historical frequency, the first SIM card sends first shared information to the second SIM card, so that the second SIM card searches for a network in the first historical frequency based on the first shared information.

In some embodiments, if the first SIM card and the second SIM card fail to search for cells in the historical frequencies, the first SIM card and the second SIM card search for a cell in a prior frequency.

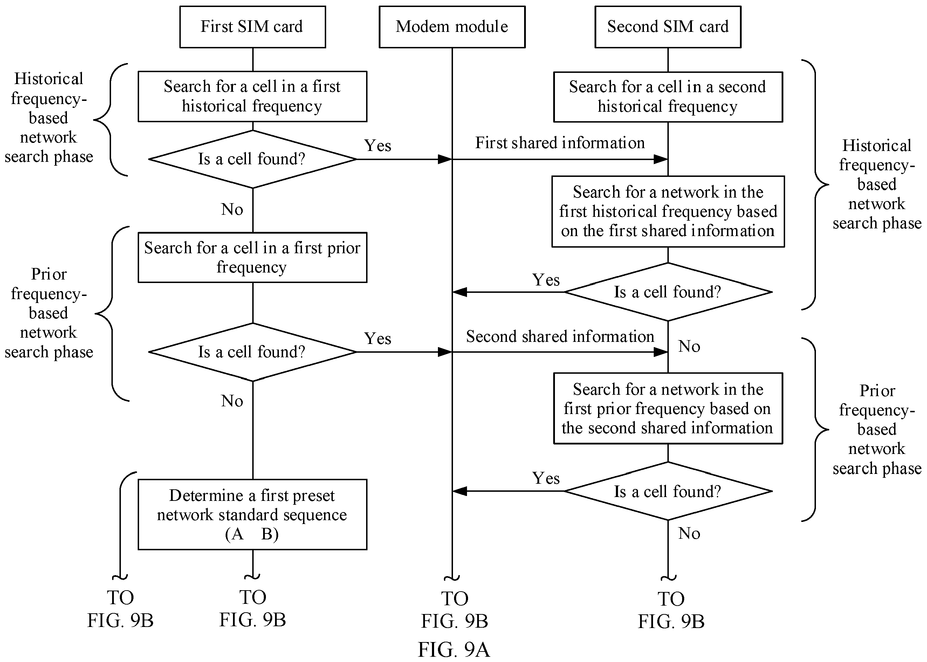

As shown in FIG. 8A or FIG. 9A, if the first SIM card finds a cell in a first prior frequency, the first SIM card sends second shared information to the second SIM card, so that the second SIM card searches for a network in the first prior frequency based on the second shared information.

For example, the first SIM card may receive a signal in the first prior frequency, calculate RSSIs, and then search for the cell in a corresponding first prior frequency in descending order of the RSSIs. The second SIM card may receive a signal in a second prior frequency, calculate RSSIs, and then search for a cell in a corresponding second prior frequency in descending order of the RSSIs. The prior frequencies may include one or more of a frequency of a cell on which the terminal device camps in a preset time period, a frequency of a cell on which the terminal device frequently camps in a preset time period, and the like. This is not limited in this application. For details, refer to descriptions of the prior frequency in the conventional technology.

If the first SIM card and the second SIM card fail to search for a network in prior frequency-based network search phase, the first SIM card and the second SIM card search for cells in network standards one by one in a preset network standard sequence. For example, the first SIM card and the second SIM card search for cells in network standards one by one in a network search sequence 4G→3G→2G. The preset network standard sequence depends on a specific setting of the terminal device. This is not limited in this application.

In this application, a preset network standard sequence of the first SIM card may be consistent with that of the second SIM card (that is, case A), or may be inconsistent with that of the second SIM card (that is, case B). The following separately describes the two cases in detail.

For the case A, as shown in FIG. 8A and FIG. 8B, after failing to search for a network in prior frequencies, the first SIM card and the second SIM card of the terminal device search for a cell in network standards one by one in a network standard sequence A→B. That is, the first SIM card and the second SIM card respectively first search for a cell in a network standard A, and then search for a cell in a network standard B.

As shown in FIG. 8B, in a network standard A-based network search phase, if the first SIM card finds a cell, the first SIM card sends third shared information to the second SIM card, so that the second SIM card searches for a network in the network standard A based on the third shared information. If the second SIM card fails to find a cell in the network standard A based on the third shared information, the second SIM card continues to search for a cell in the network standard B in the preset network standard sequence.

As shown in FIG. 8C, if the second SIM card finds a cell in the network standard B-based network search phase, the second SIM card sends fourth shared information to the first SIM card, so that the first SIM card searches for a network in the network standard B based on the fourth shared information. In a network search process of the terminal device shown in FIG. 8A to FIG. 8C, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met. For a specific analysis process and a determining criterion of the foregoing process, refer to descriptions in the conventional technology. Details are not described in this application.

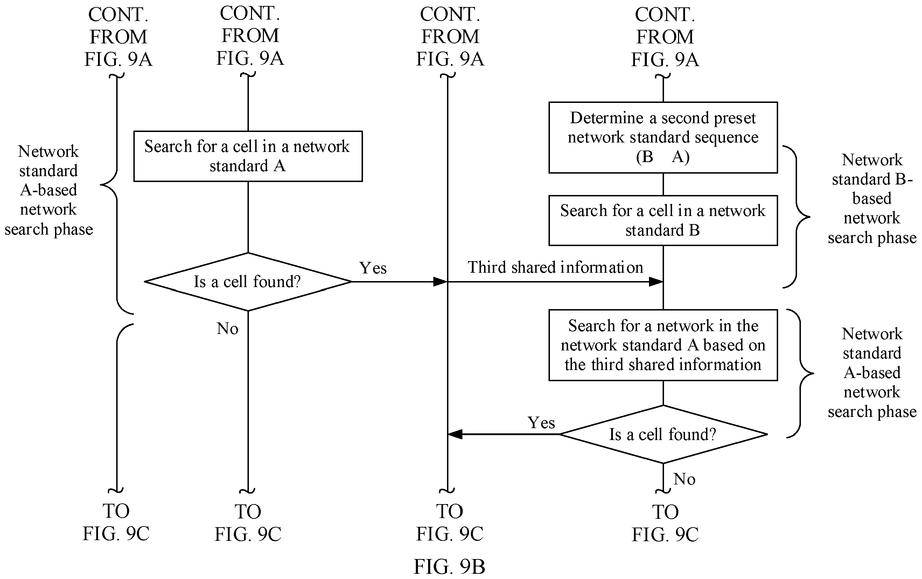

For the case B, as shown in FIG. 9 A and FIG. 9B, after failing to search for a network in a prior frequency-based network search phase, the first SIM card of the terminal device searches for cells in network standards one by one in a network standard sequence A->B, and the second SIM card searches for cells in network standards one by one in a network standard sequence A->B. That is, the first SIM card first searches for a cell in the network standard A, and then searches for a cell in the network standard B. The second SIM card first searches for a cell in the network standard B, and then searches for a cell in the network standard A.

As shown in FIG. 9B, if the first SIM card finds a cell in a network standard A-based network search phase, the first SIM card sends third shared information to the second SIM card, and the second SIM card skips the current network standard B-based network search phase, jumps to the network standard A-based network search phase, and searches for a network in the network standard A based on the third shared information. If the second SIM card fails to find a cell in the network standard Abased on the third shared information, the second SIM card continues to jump back to the previous network standard B-based network search phase, and searches for a cell in the network standard B.

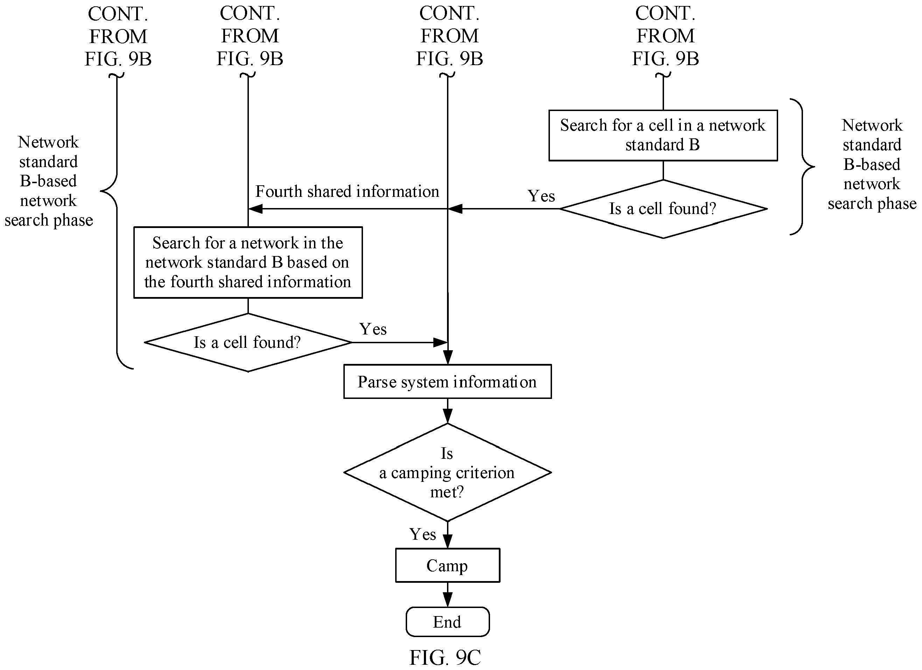

As shown in FIG. 9C, if the second SIM card finds a cell in the network standard B-based network search phase, the second SIM card sends fourth shared information to the first SIM card, so that the first SIM card searches for a network in the network standard B based on the fourth shared information. In a network search process of the terminal device shown in FIG. 9A to FIG. 9C, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met.

FIG. 8A to FIG. 8C and FIG. 9A to FIG. 9C each describe a specific process in which the second SIM card searches for a network in the first historical frequency based on the first shared information, the second SIM card searches for a network in the first prior frequency based on the second shared information, the second SIM card searches for a network in the network standard Abased on the third shared information, and the first SIM card searches for a network in the network standard B based on the fourth shared information. The specific progress depends on specific content of shared information. For details, refer to the foregoing specific descriptions of step S603 shown in FIG. 7.

Further, when searching for the cells in network standards one by one in the preset network standard sequence, the first SIM card and the second SIM card specifically search for cells in each network standard. Alternatively, the first SIM card and the second SIM card may search for cells in a preset frequency band sequence. For example, it is assumed that the first SIM card searches for cells in network standards one by one in a network search sequence 4G→3G→2G. When the first SIM card searches for a cell in 4G, the first SIM card may search for a cell in a preset frequency band sequence: a preset frequency band→a full frequency band. When the first SIM card searches for a cell in 3G, the first SIM card also searches for a cell in the preset frequency band sequence: the preset frequency band→the full frequency band. When the first SIM card searches for a cell in 2G, the first SIM card also searches for a cell in the preset frequency band sequence: the preset frequency band→the full frequency band. The preset frequency band may include a common frequency band allocated by a network to the terminal device, or a frequency band in which the terminal device frequently camps in a preset time period. This is not limited in this application. For details, refer to descriptions of the preset frequency band in the conventional technology.

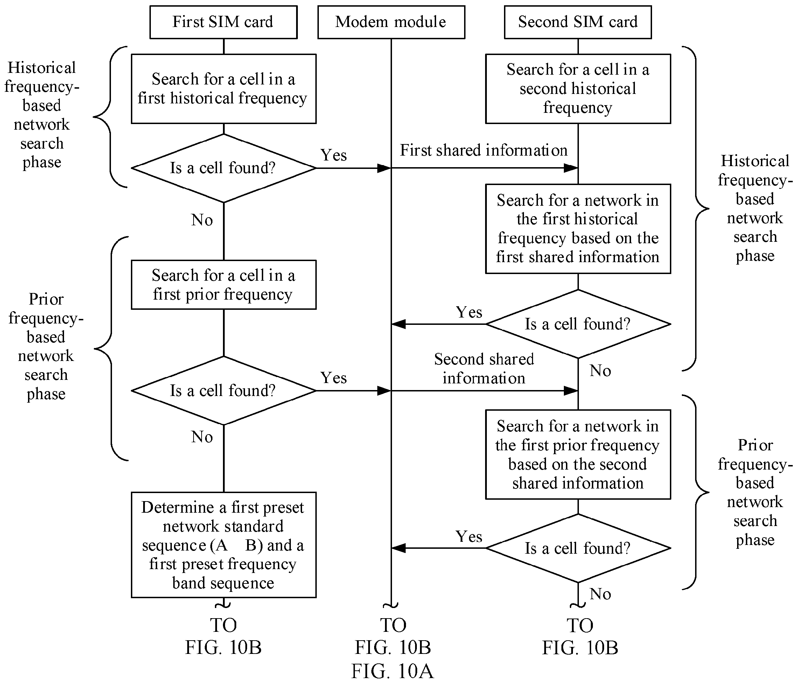

FIG. 10A to FIG. 10E is a flowchart of a network search method in a multi-card mode in a preset network standard sequence and a preset frequency band sequence according to an embodiment of this application. As shown in FIG. 10A to FIG. 10E, a network search process of the terminal device mainly includes a historical frequency-based network search phase, a prior frequency-based network search phase, a network standard A-based network search phase, and a network standard B-based network search phase.

Specifically, as shown in FIG. 10A, in the historical frequency-based network search phase, if a first SIM card finds a cell in a first historical frequency, the first SIM card sends first shared information to a second SIM card, so that the second SIM card searches for a network in the first historical frequency based on the first shared information. If neither the first SIM card nor the second SIM card finds a cell in the historical frequency-based network search phase, the first SIM card and the second SIM card enter the prior frequency-based network search phase.

As shown in FIG. 10A, in the prior frequency-based network search phase, if the first SIM card finds a cell in a first prior frequency, the first SIM card sends second shared information to the second SIM card, so that the second SIM card searches for a network in the first prior frequency based on the second shared information. If neither the first SIM card nor the second SIM card finds a cell in the prior frequency-based network search phase, the first SIM card and the second SIM card enter the network standard A-based network search phase.

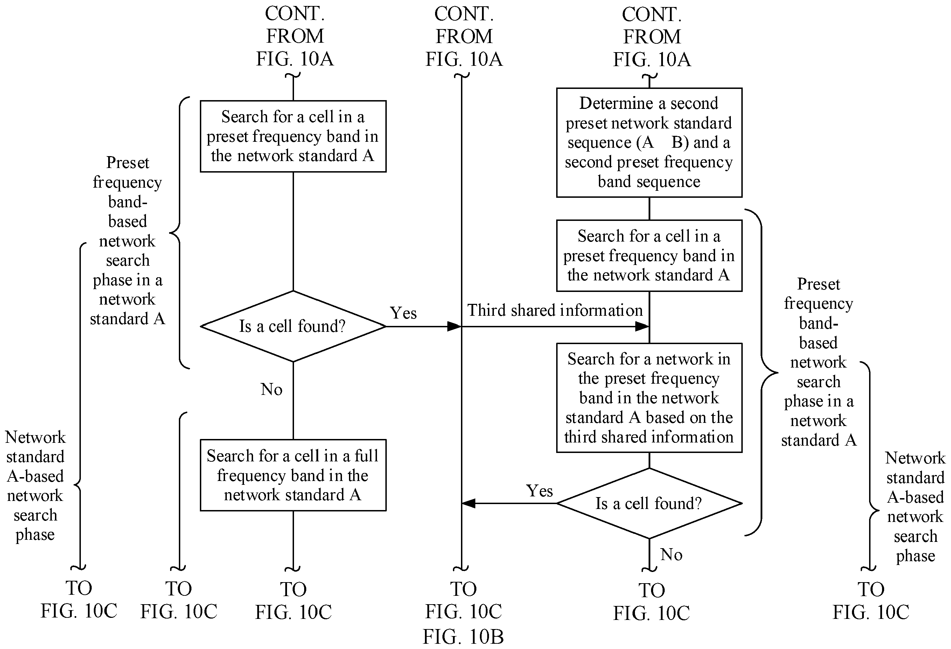

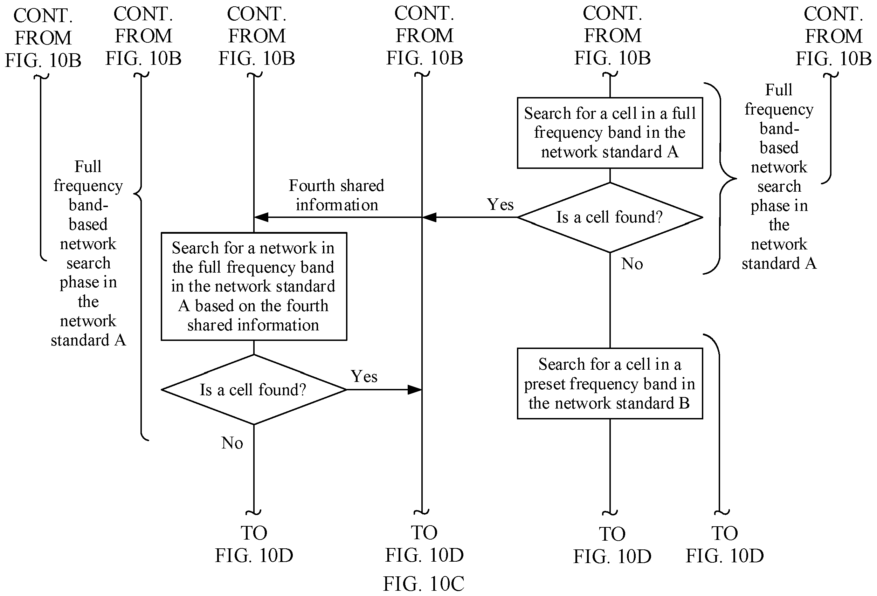

As shown in FIG. 10B and FIG. 10C, the network standard A-based network search phase includes a preset frequency band-based network search phase in the network standard A and a full frequency band-based network search phase in the network standard A. In the preset frequency band-based network search phase in the network standard A, when finding a cell in a preset frequency band in the network standard A, the first SIM card sends third shared information to the second SIM card, so that the second SIM card searches for a network in the preset frequency band in the network standard Abased on the third shared information. If neither the first SIM card nor the second SIM card finds a cell in the preset frequency band-based network search phase in the network standard A, the first SIM card and the second SIM card enter the full frequency band-based network search phase in the network standard A.

As shown in FIG. 10C, in the full frequency band-based network search phase in the network standard A, when finding a cell in a full frequency band in the network standard A, the second SIM card sends fourth shared information to the first SIM card, so that the first SIM card searches for a network in the full frequency band in the network standard A based on the fourth shared information. If neither the first SIM card nor the second SIM card finds a cell in the full frequency band-based network search phase in the network standard A, the first SIM card and the second SIM card enter the network standard B-based network search phase.

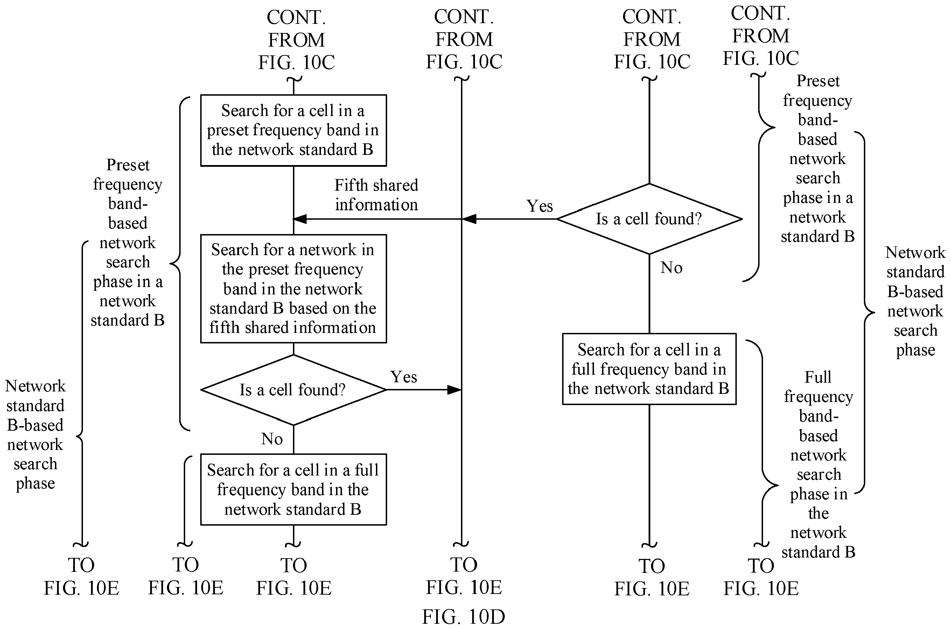

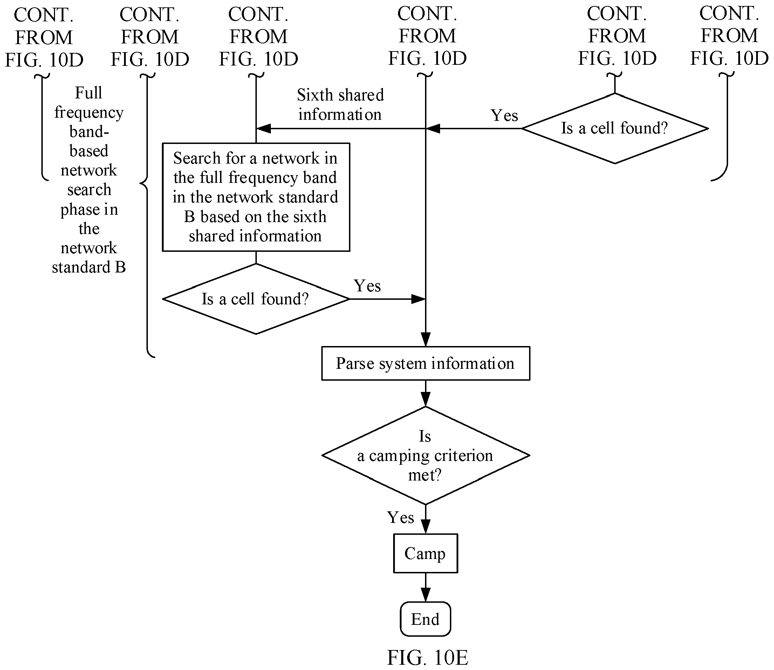

As shown in FIG. 10D and FIG. 10E, the network standard B-based network search phase includes a preset frequency band-based network search phase in the network standard B and a full frequency band-based network search phase in the network standard B. In the preset frequency band-based network search phase in the network standard B, when finding a cell in a preset frequency band in the network standard B, the second SIM card sends fifth shared information to the first SIM card, so that the first SIM card searches for a network in the preset frequency band in the network standard B based on the fifth shared information. If neither the first SIM card nor the second SIM card finds a cell in the preset frequency band-based network search phase in the network standard B, the first SIM card and the second SIM card enter the full frequency band-based network search phase in the network standard B.

As shown in FIG. 10E, in the full frequency band-based network search phase in the network standard B, when finding a cell in a full frequency band in the network standard B, the second SIM card sends sixth shared information to the first SIM card, so that the first SIM card searches for a network in the full frequency band in the network standard B based on the sixth shared information. In a network search process of the terminal device shown in FIG. 10A to FIG. 10E, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met.

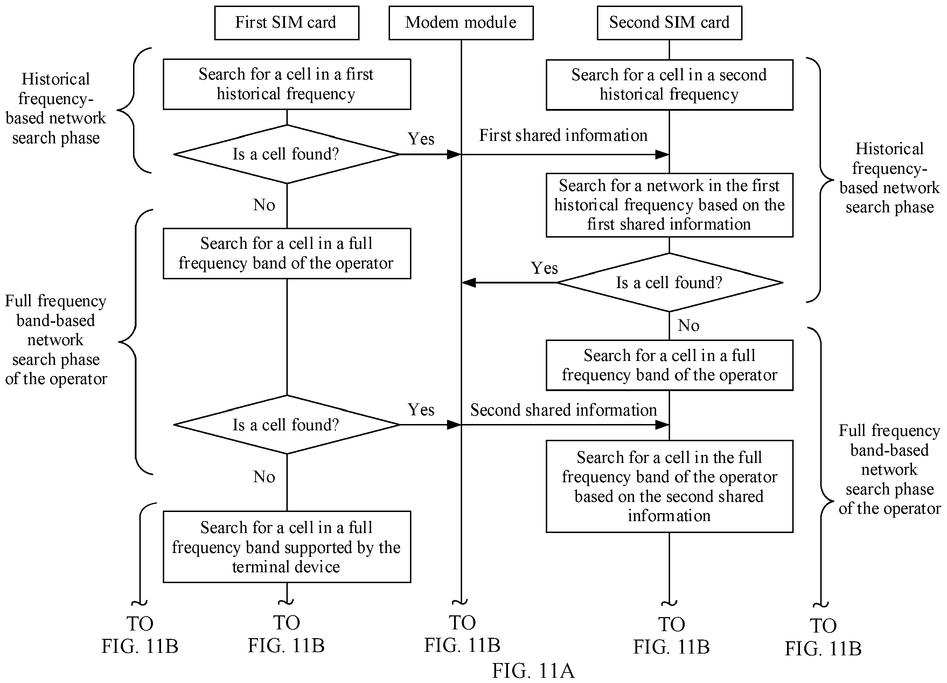

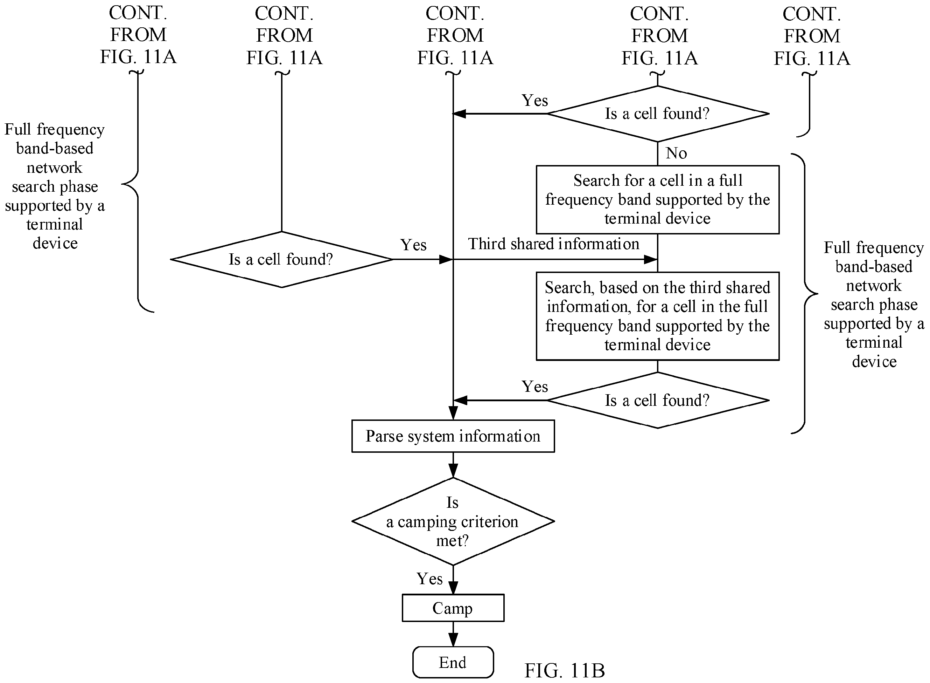

It should be noted that, FIG. 10A to FIG. 10E specifically describes a network search process of the terminal device by using preset network standard sequences (that is, the case A) of the first SIM card and the second SIM card as an example. When a preset network standard sequence of the first SIM card is inconsistent with that of the second SIM card (that is, the case B), cell search corresponding to each network standard may also be completed in a preset frequency band sequence similar to that in FIG. 11A and FIG. 11B.

In addition, FIG. 10A to FIG. 10E specifically describes a network search process of the terminal device by using an example in which a preset frequency band sequence corresponding to each network standard of the first SIM card is consistent with that of the second SIM card. The network search method in the multi-card mode provided in this application is also applicable to a case in which preset frequency band sequences corresponding to different network standards are inconsistent, or a case in which a preset frequency band sequence corresponding to the first SIM card is inconsistent with that of the second SIM card in a same network standard.

In some other embodiments, if the first SIM card and the second SIM card fail to search for cells in the historical frequencies, the first SIM card and the second SIM card may further separately search for a cell in a full frequency band of an operator serving the first SIM card and the second SIM card. If the foregoing search fails, the first SIM card and the second SIM card search for cells in a full frequency band supported by the terminal device.

In a network search process, if either of the first SIM card and the second SIM card finds a cell, the first SIM card or the second SIM card sends shared information to the first SIM card or the second SIM card in real time, so that the first SIM card or the second SIM card can perform cell search by referring to the shared information. This reduces time and computing power.

As shown in FIG. 11A, after the first SIM card and the second SIM card fail to search for cells in the historical frequencies, the first SIM card and the second SIM card separately search for a cell in a full frequency band of an operator serving the first SIM card and the second SIM card. If the first SIM card finds the cell in the full frequency band-based network search phase of the operator, the first SIM card sends second shared information to the second SIM card, so that the second SIM card searches for a cell in a full-frequency band of the operator based on the second shared information. If the first SIM card fails to find a cell in the full frequency band of the operator, the first SIM card continues to search for a cell in a full frequency band supported by the terminal device.

As shown in FIG. 11B, if the first SIM card finds a cell in the full frequency band-based network search phase supported by the terminal device, the first SIM card sends third shared information to the second SIM card, so that the second SIM card searches, based on the third shared information, for the cell in the full frequency band supported by the terminal device. In a network search process of the terminal device shown in FIG. 11A and FIG. 11B, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met.

In some other embodiments, if the first SIM card and the second SIM card fail to search for cells in the historical frequencies, the first SIM card and the second SIM card may separately search for a cell based on a search task specified by the modem module.

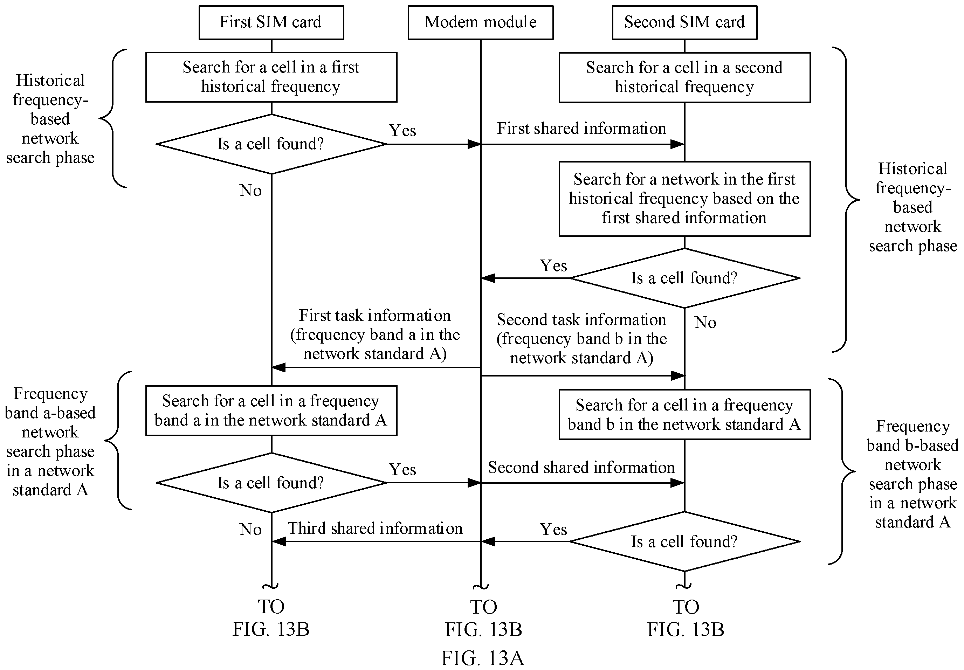

As shown in 12A or FIG. 13A, after the first SIM card and the second SIM card fail to search for cells in the historical frequencies, the modem module respectively sends first task information and second task information to the first SIM card and the second SIM card, so that the first SIM card and the second SIM card separately search for a cell based on the first task information and the second task information.

The first task information and the second task information may respectively indicate search tasks in different network standards, or the first task information and the second task information may respectively indicate search tasks in different frequency bands in a same network standard. This is not limited in this application.

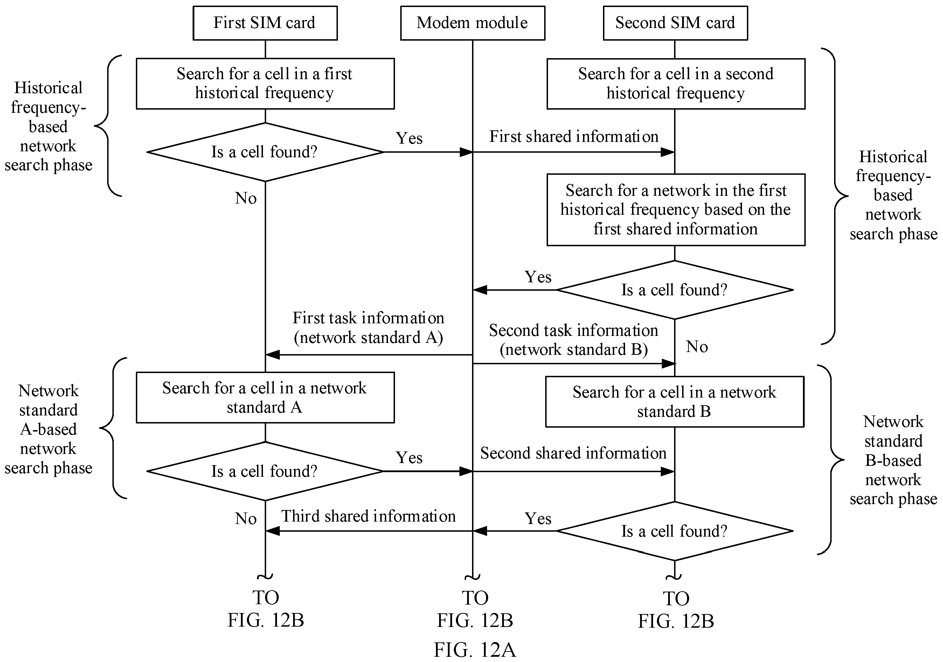

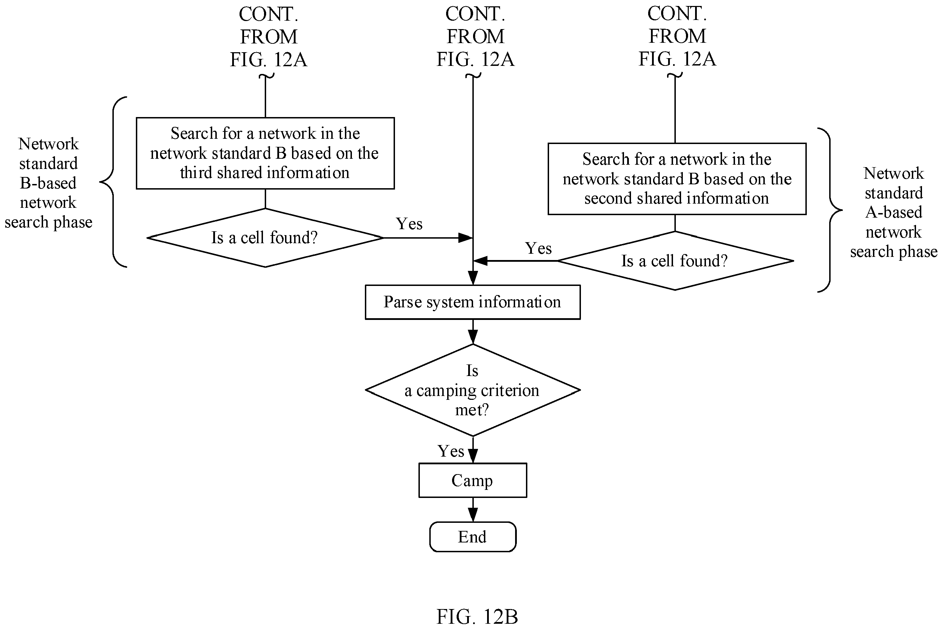

It is assumed that the first task information and the second task information separately indicate search tasks in different network standards. More specifically, the first task information indicates a search task in the network standard A, and the second task information indicates a search task in the network standard B. As shown in 12A and FIG. 12B, if the first SIM card finds a cell in the network standard A-based network search phase, the first SIM card sends second shared information to the second SIM card, so that the second SIM card searches for a cell in the network standard A based on the second shared information. If the second SIM card finds a cell in the network standard B - based network search phase, the second SIM card sends third shared information to the first SIM card, so that the first SIM card searches for a cell in the network standard B based on the third shared information. In a network search process of the terminal device shown in FIG. 12A and FIG. 12B, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met.

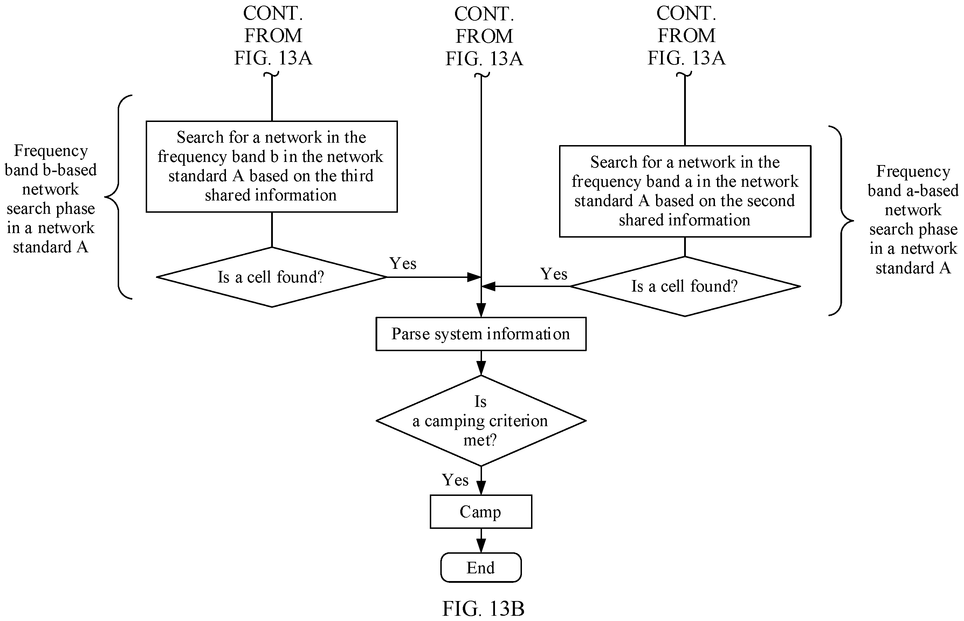

It is assumed that the first task information and the second task information respectively indicate search tasks in different frequency bands in a same network standard. More specifically, the first task information indicates a search task in a frequency band a in the network standard A, and the second task information indicates a search task in a frequency band b in the network standard A. As shown in FIG. 13A, if the first SIM card finds a cell in the frequency band a in the network standard A, the first SIM card sends second shared information to the second SIM card, so that the second SIM card searches for a cell in the frequency band a in the network standard A based on the second shared information. If the second SIM card finds a cell in the frequency band b in the network standard A, the second SIM card sends third shared information to the first SIM card, so that the first SIM card searches for a cell in the frequency band b in the network standard A based on the third shared information. In a network search process of the terminal device shown in FIG. 13A and FIG. 13B, when any SIM card finds a cell, the SIM card notifies a modem module to perform subsequent processing, including parsing a system message received in a corresponding frequency, determining, based on a parsing result of the system message, whether a camping criterion is met, and camping on a cell corresponding to the frequency when the camping criterion is met.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the terminal device includes a corresponding hardware structure and/or software module for executing each function. A person skilled in the art should easily be aware that, in combination with units and algorithm steps of the examples described in embodiments disclosed in this specification, this application may be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

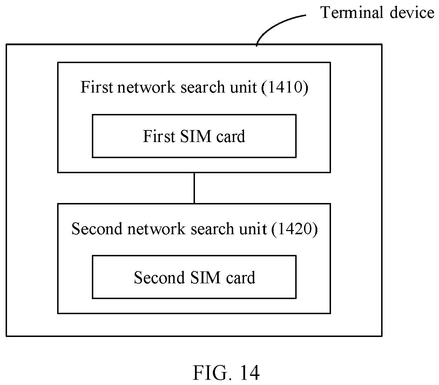

For example, when each functional module is obtained through division in an integrated manner, FIG. 14 is a block diagram of a structure of a terminal device according to an embodiment of this application. The terminal device may include a first network search unit 1410 and a second network search unit 1420. The first network search unit 1410 carries a first SIM card, and the second network search unit 1420 carries a second SIM card.

The first network search unit 1410 is configured to: when the terminal device meets a preset condition, and the first SIM card fails to search for a cell in a first historical frequency, search for a cell in a first frequency band or a first frequency by using the first SIM card. The first frequency band or the first frequency belongs to a first standard. The first frequency band or the first frequency is preset in the terminal device. The second network search unit 1420 is configured to: when the second SIM card fails to search for a cell in a second historical frequency, search for a cell in a second frequency band or a second frequency by using the second SIM card. The second frequency band or the second frequency belongs to the first standard or a second standard. The second frequency band or the second frequency is preset in the terminal device. The second network search unit 1420 is further configured to: when the first network search unit 1410 fails to search for a cell in the first frequency band or the first frequency, skip searching for the cell in the first frequency band or the first frequency.

In some embodiments, the first network search unit 1410 is specifically configured to: when the first SIM card finds a first cell in the first frequency band or the first frequency, send first search information (for example, a frequency of the first cell and/or a physical cell ID of the first cell) to the second network search unit, so that the second SIM card skips searching for a cell in the first frequency band or the first frequency based on the first search information, and accesses the first cell based on the first search information.

In some embodiments, the second network search unit 1420 is specifically configured to: when the first SIM card finds the first cell in the first frequency band or the first frequency, control the second SIM card to skip searching for the cell in the first frequency band or the first frequency, and control the second SIM card to access the first cell.

In some embodiments, the second network search unit is configured to: when the first SIM card finds the first cell in the first frequency band or the first frequency, control the second SIM card to skip searching for the cell in the first frequency band or the first frequency, and control the second SIM card to search for a cell in a third frequency band or a third frequency. The third frequency band or the third frequency belongs to the first standard, the second standard, or a third standard, and the third frequency band or the third frequency is preset in the terminal device.

In some embodiments, the first network search unit 1410 is specifically configured to: when the first SIM card fails to search for the cell in the first frequency band or the first frequency, send second search information (for example, a frequency in which a cell has been searched for but has not been found) to the second network search unit, so that the second SIM card skips searching for the cell in the first frequency band or the first frequency based on the second search information.

In some embodiments, when the first SIM card fails to search for the cell in the first frequency band or the first frequency, the second network search unit 1420 is further configured to: control the second SIM card to search for a cell in the third frequency band or the third frequency.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a detection apparatus. Certainly, the processor and the storage medium may alternatively exist in the device as discrete components.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In an optional manner, this application provides a chip system. The chip system includes a processor and a memory. The memory stores computer program code. When the computer program code is executed by the processor, the method in any possible implementation provided in this application is implemented. The chip system may include a chip, or may include a chip and another discrete component.

In the several embodiments provided in this application, it should be understood that the disclosed apparatus and method may be implemented in other manners. For example, the foregoing apparatus embodiments are merely examples. For example, division of the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A network search method in a multi-card mode, wherein when a terminal device meets a preset condition, and the terminal device carries a first subscriber identity module SIM card and a second SIM card, the terminal device performs a network search procedure, and the network search procedure comprises:
when the first SIM card and the second SIM card separately fail to search for a cell in a historical frequency, searching, by the first SIM card, for a cell in a first frequency band or a first frequency, and searching, by the second SIM card, for a cell in a second frequency band or a second frequency, wherein the first frequency band and the first frequency belong to a first standard, the second frequency band and the second frequency belong to the first standard or a second standard, and the first frequency band or the first frequency, and the second frequency band or the second frequency are preset in the terminal device; and
when the first SIM card fails to search for the cell in the first frequency band or the first frequency, skipping, by the second SIM card, searching for a cell in the first frequency band or the first frequency, wherein
public land mobile networks PLMN of networks to which the first SIM card and the second SIM card belong are the same.

2. The method according to claim 1, wherein
when the first SIM card finds a first cell in the first frequency band or the first frequency, the first SIM card sends first search information to the second SIM card, so that the second SIM card skips searching for the cell in the first frequency band or the first frequency based on the first search information, and accesses the first cell based on the first search information, wherein
the first search information comprises one or more of the following: a frequency of the first cell and a physical cell identity ID of the first cell.

3. The method according to claim 1 or 2, wherein
when the first SIM card finds the first cell in the first frequency band or the first frequency, the second SIM card skips searching for the cell in the first frequency band or the first frequency, and the second SIM card accesses the first cell.

4. The method according to claim 1 or 2, wherein
when the first SIM card finds the first cell in the first frequency band or the first frequency, the second SIM card skips searching for the cell in the first frequency band or the first frequency, and searches for a cell in a third frequency band or a third frequency, wherein the third frequency band or the third frequency belongs to the first standard, the second standard, or a third standard, and the third frequency band or the third frequency is preset in the terminal device.

5. The method according to claim 1, wherein
when the first SIM card fails to find the cell in the first frequency band or the first frequency, the first SIM card sends second search information to the second SIM card, so that the second SIM card skips searching for the cell in the first frequency band or the first frequency based on the second search information, wherein
the second search information comprises a frequency in which the second SIM card has searched for but has not found the cell in the first frequency band or the first frequency.

6. The method according to claim 1 or 5, wherein when the first SIM card fails to search for the cell in the first frequency band or the first frequency, the method further comprises:
searching, by the second SIM card, for a cell in a third frequency band or a third frequency, wherein the third frequency band belongs to the first standard, the second standard, or a third standard, and the third frequency band or the third frequency is preset in the terminal device.

7. The method according to any one of claims 1 to 6, wherein the first frequency band and the second frequency band each are a part of a preset frequency band.

8. The method according to any one of claims 1 to 7, wherein the first frequency band and the second frequency band each are a part of a communications frequency band supported by the terminal device.

9. The method according to any one of claims 1 to 8, wherein the preset condition comprises: powering on or reconnecting to a network.

10. A terminal device, wherein the terminal device comprises a first network search unit and a second network search unit, the first network search unit carries a first subscriber identity module SIM card, and the second network search unit carries a second SIM card;
the first network search unit is configured to: when the terminal device meets a preset condition, and the first SIM card fails to search for a cell in a first historical frequency, search for a cell in a first frequency band or a first frequency by using the first SIM card, wherein the first frequency band and the first frequency belong to a first standard, and the first frequency band or the first frequency is preset in the terminal device;
the second network search unit is configured to: when the terminal device meets the preset condition, and the second SIM card fails to search for a cell in a second historical frequency, search for a cell in a second frequency band or a second frequency by using the second SIM card, wherein the second frequency band and the second frequency belong to the first standard or a second standard, and the second frequency band or the second frequency is preset in the terminal device; and
the second network search unit is further configured to: when the first network search unit fails to search for the cell in the first frequency band or the first frequency, skip searching for a cell in the first frequency band or the first frequency, wherein
public land mobile networks PLMN of networks to which the first SIM card and the second SIM card belong are the same.

11. The terminal device according to claim 10, wherein the first network search unit is specifically configured to:
when the first SIM card finds a first cell in the first frequency band or the first frequency, send first search information to the second network search unit, so that the second SIM card skips searching for the cell in the first frequency band or the first frequency based on the first search information, and accesses the first cell based on the first search information, wherein
the first search information comprises one or more of the following: a frequency of the first cell and a physical cell identity ID of the first cell.

12. The terminal device according to claim 10 or 11, wherein the second network search unit is specifically configured to:
when the first SIM card finds the first cell in the first frequency band or the first frequency, control the second SIM card to skip searching for the cell in the first frequency band or the first frequency, and control the second SIM card to access the first cell.

13. The terminal device according to claim 10 or 11, wherein the second network search unit is specifically configured to:
when the first SIM card finds the first cell in the first frequency band or the first frequency, control the second SIM card to skip searching for the cell in the first frequency band or the first frequency, and control the second SIM card to search for a cell in a third frequency band or a third frequency, wherein the third frequency band or the third frequency belongs to the first standard, the second standard, or a third standard, and the third frequency band or the third frequency is preset in the terminal device.

14. The terminal device according to claim 10, wherein the first network search unit is specifically configured to:
when the first SIM card fails to find the cell in the first frequency band or the first frequency, send second search information to the second network search unit, so that the second SIM card skips searching for the cell in the first frequency band or the first frequency based on the second search information, wherein
the second search information comprises a frequency in which the second SIM card has searched for but has not found the cell in the first frequency band or the first frequency.

15. The terminal device according to claim 10 or 14, wherein when the first SIM card fails to search for the cell in the first frequency band or the first frequency, the second network search unit is further configured to: control the second SIM card to search for a cell in a third frequency band or a third frequency, wherein the third frequency band belongs to the first standard, the second standard, or a third standard, and the third frequency band or the third frequency is preset in the terminal device.

16. The terminal device according to any one of claims 10 to 15, wherein the first frequency band and the second frequency band each are a part of a preset frequency band.

17. The terminal device according to any one of claims 10 to 16, wherein the first frequency band and the second frequency band each are a part of a communications frequency band supported by the terminal device.

18. The terminal device according to any one of claims 10 to 17, wherein the preset condition comprises: powering on or reconnecting to a network.

19. A computer-readable storage medium, wherein the computer-readable storage medium stores computer program code, and when the computer program code is executed by a processing circuit, the network search method in the multi-card mode according to any one of claims 1 to 9 is implemented.

20. A chip system, wherein the chip system comprises a processing circuit and a storage medium, the storage medium stores computer program code, and when the computer program code is executed by the processing circuit, the network search method in the multi-card mode according to any one of claims 1 to 9 is implemented.

21. A computer program product, wherein the computer program product is configured to run on a computer, to implement the network search method in the multi-card mode according to any one of claims 1 to 9.
